(19) Europäisches Patentamt / European Patent Office / Office européen des brevets

(11) **EP 2 451 230 A1**

(12) **EUROPEAN PATENT APPLICATION**
published in accordance with Art. 153(4) EPC

(43) Date of publication:
**09.05.2012 Bulletin 2012/19**

(51) Int Cl.:
*H04W 72/04* (2009.01)      *H04W 48/10* (2009.01)

(21) Application number: **09846754.1**

(22) Date of filing: **29.06.2009**

(86) International application number:
**PCT/JP2009/002982**

(87) International publication number:
**WO 2011/001458 (06.01.2011 Gazette 2011/01)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Fujitsu Limited**
**Kawasaki-shi, Kanagawa 211-8588 (JP)**

(72) Inventors:
• **NAKAMURA, Takaharu**
**Kawasaki-shi**
**Kanagawa 211-8588 (JP)**

• **ODE, Takayoshi**
**Kawasaki-shi**
**Kanagawa 211-8588 (JP)**

(74) Representative: **Wilding, Frances Ward et al**
**Haseltine Lake LLP**
**300 High Holborn**
**London WC1V 7JH (GB)**

(54) **WIRELESS COMMUNICATION SYSTEM, BASE STATION APPARATUS, TERMINAL APPARATUS, AND WIRELESS COMMUNICATION METHOD FOR WIRELESS COMMUNICATION SYSTEM**

(57)      A radio communication system, including: a first and second base station apparatuses which includes one or plurality of cells or sectors, respectively; and a terminal apparatus, wherein each of the first and second base station apparatuses includes: a processing unit which executes scrambling processing on a first and second transmission data that are different from each other for each cell or sector by using a first and second scrambling codes having a predetermined phase difference respectively, when the first and second transmission data are to be transmitted to the terminal apparatus respectively; and a transmission unit which transmits the first and second transmission data processed by the scrambling processing to the terminal apparatus respectively, and the terminal apparatus includes a reception unit which executes descrambling processing on the first and second transmission data by using the first and second scrambling codes respectively.

FIG. 1

RADIO COMMUNICATION SYSTEM **10**

EP 2 451 230 A1

Printed by Jouve, 75001 PARIS (FR)

**Description**

TECHNICAL FIELD

The embodiments discussed herein are related to a radio communication system, a base station apparatus, a terminal apparatus, and a radio communication method in the radio communication system.

BACKGROUND ART

In the LTE - A (LTE-Advanced) system, a radio communication through CoMP (Coordinate Multi Point access) is investigated (for example, the following Non-Patent Documents 1 and 2).
The CoMP is executed through a transmission of different data to a terminal by means of MIMO (Multiple Input Multiple Output) by each base station when the terminal is positioned in a region which can carry out a communication with a plurality of base stations (for sector), for example.
On the other hand, in a radio communication system such as the LTE, base station performs scrambling processing on transmission data (for example, the following Non-Patent Documents 3 and 4). For example, the base station adds transmission data b (0), ···, b ($M_{bit}$ - 1) to a scrambling code c (i) and calculates a remainder (Modulo) of "2", thereby executing the scrambling. In other words,

[Equation 1]

$$\tilde{b}(i) = (b(i) + c(i)) \bmod 2$$

Herein, the scrambling code c (i) is a gold code of a length "31", for example, and is obtained in accordance with the following generating polynomial in that case.

[Equation 2]

$$c(n) = (x_1(n + N_C) + x_2(n + N_C)) \bmod 2$$

[Equation 3]

$$x_1(n + 31) = (x_1(n + 3) + x_1(n)) \bmod 2$$

[Equation4]

$$x_2(n + 31) = (x_2(n + 3) + x_2(n + 2) + x_2(n + 1) + x_2(n)) \bmod 2$$

Herein,

[Equation 5]

$$x_1(0) = 1, \; x_1(n) = 0, \; n = 1,2,...,30, \; N_C = 1600 \, .$$

Furthermore, an initial value of the scrambling code c (i) is obtained in the following equation.

[Equation 6]

$$c_{init} = n_{RNTI} \cdot 2^{14} + \lfloor n_s / 2 \rfloor \cdot 2^9 + N_{ID}^{cell}$$

In other words, the initial value of the scrambling code c (i) is determined by a terminal number,

[Equation 7]

$$n_{RNTI} \ (RNTI : Radio \ Network \ Temporally \ ID)$$

a (physical) cell (or sector) number

[Equation 8]

$$N_{ID}^{cell}$$

and a slot number.

[Equation 9]

$$n_s$$

As the related art of this type, for example, there is disclosed a control apparatus or the like including a transmission assignment unit which selects at least two transmission sectors for carrying out a transmission to a mobile station based on reception quality given from the mobile station and assigns the transmission to the mobile station, and a transmission unit which carries out a transmission from the transmission sector to the mobile station by using the same scrambling code for a sector identification (for example, the following Patent Document 1).

For example, there is disclosed a base station apparatus or the like including a base station peculiar scrambling generation unit which generates a base station peculiar scrambling code, a sector peculiar orthogonal series generation unit which generates a sector peculiar orthogonal series, and a multiplication control unit which controls a necessity for a multiplication of the base station peculiar scrambling code and the sector peculiar orthogonal series based on a necessity for a software synthesis for each physical channel (for example, the following Patent Document 2).

Patent Document 1: Japanese Laid-Open Patent Publication No. 2006-311475
Patent Document 2: Japanese Laid-Open Patent Publication No. 2008-92379
Non-Patent Document 1: 3GPP TSG-RAN-WG1 R1-084203
Non-Patent Document 2: 3GPP TS 36.212 V8.6.0
Non-Patent Document 3: 3GPP TS 36.211 V8.2.0
Non-Patent Document 4: 3GPP TSG-RAN-WG1 R1-081229

DISCLOSURE OF THE INVENTION

PROBLEMS TO BE SOLVED BY THE INVENTION

Although the initial value of the scrambling code is determined by the terminal number, the cell number and the slot number as described above, the terminal number is set by the base station for each cell and the cell number is also varied every cell. In some cases, moreover, the slot number is also varied between cells. In the case in which the CoMP transmission is carried out from a different cell to a terminal, accordingly, the initial value of the scrambling code has a different value for each cell. Therefore, each base station and the terminal create and use different scrambling codes from each other, thereby carrying out scrambling and descrambling processing. Accordingly, each base station and the terminal carry out complicated processing, and furthermore, a power consumption is also increased.

In the Patent Documents 1 and 2, moreover, there is not disclosed the case in which different data are transmitted from two sectors. The reason is as follows. As described in the Patent Document 1, in the case in which the same scrambling code is used so that the different data are transmitted from the two sectors, the mobile station receives two signals. However, the two signals cause an interference so that data transmitted from the two sectors cannot be identified.

Accordingly, it is an object in one aspect of the invention to provide a radio communication system, a base station apparatus, a terminal apparatus and a radio communication method in the radio communication system which serve to reduce a processing in the terminal apparatus or the base station apparatus.

Furthermore, it is another object in one aspect of the present invention to provide a radio communication system or the like which serves to reduce a power consumption in a terminal apparatus or a base station apparatus.

MEANS FOR SOLVING THE PROBLEM

According to an aspect of the invention, a radio communication system, including: a first and second base station apparatuses which includes one or plurality of cells or sectors, respectively; and a terminal apparatus, wherein the radio communication system performs a radio communication between the first and second base station apparatuses and the terminal apparatus, each of the first and second base station apparatuses includes: a processing unit which executes scrambling processing on a first and second transmission data that are different from each other for each cell or sector by using a first and second scrambling codes having a predetermined phase difference respectively, when the first and second transmission data are to be transmitted to the terminal apparatus respectively; and a transmission unit which transmits the first and second transmission data processed by the scrambling processing to the terminal apparatus respectively, and the terminal apparatus includes a reception unit which receives the first and second transmission data and executes descrambling processing on the first and second transmission data by using the first and second scrambling codes respectively.

Furthermore, according to an aspect of the invention, an apparatus includes: a radio communication system, including: a first and second base station apparatuses each of which includes one or a plurality of cells or sectors; and a terminal apparatus, wherein the radio communication system performs a radio communication between the first and second base station apparatuses, the terminal apparatus includes: a processing unit which executes scrambling processing on a first and second transmission data that are different from each other for each the cell or sector by using a first scrambling code; and a transmission unit which transmits the first and second transmission data processed by the scrambling processing to the first and second base station apparatuses respectively, and the first and second base station apparatuses each include a reception unit which executes descrambling processing on the first and second transmission data by using the first scrambling code.

EFFECTS OF THE INVENTION

It is possible to provide a radio communication system, a base station apparatus, a terminal apparatus, and a radio communication method in the radio communication system which serve to reduce a processing in a terminal apparatus or a base station apparatus. Furthermore, it is possible to provide a radio communication system or the like which serves to reduce a power consumption in a terminal apparatus or a base station apparatus.

BRIEF DESCRIPTION OF THE DRAWINGS

Fig. 1 is a view illustrating an example of a structure of a radio communication system.
Fig. 2 is a view illustrating an example of the structure of the radio communication system in a downward direction.
Fig. 3 is a diagram illustrating an example of a structure of a master base station apparatus.
Fig. 4 is a diagram illustrating an example of a structure of a slave base station apparatus.
Fig. 5 is a diagram illustrating an example of a structure of a terminal apparatus.
Fig. 6 is a diagram illustrating an example of a structure of a gold code generator.
Fig. 7 is a diagram illustrating an example of the structure of the gold code generator.
Fig. 8 is a diagram illustrating an example of the structure of the gold code generator.
Fig. 9 is a diagram illustrating an example of a structure of a scrambling code generation unit.
Fig. 10 is a flow chart illustrating an example of an operation.
Fig. 11 is a flow chart illustrating an example of the operation.
Fig. 12 is a view illustrating an example of a structure of a radio communication system in a downward direction.
Fig. 13 is a diagram illustrating an example of a structure of a master base station apparatus.

Fig. 14 is a diagram illustrating an example of a structure of a slave base station apparatus.

Fig. 15 is a flow chart illustrating an example of an operation.

Fig. 16 is a view illustrating an example of a structure of a radio communication system in an upward direction.

Fig. 17 is a diagram illustrating an example of a structure of a master base station apparatus.

Fig. 18 is a diagram illustrating an example of a structure of a slave base station apparatus.

Fig. 19 is a diagram illustrating an example of a structure of a terminal apparatus.

Fig. 20 is a flow chart illustrating an example of an operation.

Fig. 21 is a flow chart illustrating an example of the operation.

Fig. 22 is a diagram illustrating an example of a structure of a terminal.

Fig. 23 is a diagram illustrating an example of the structure of the terminal.

Fig. 24 is a diagram illustrating an example of a structure of a base station apparatus.

## BEST MODE FOR CARRYING OUT THE INVENTION

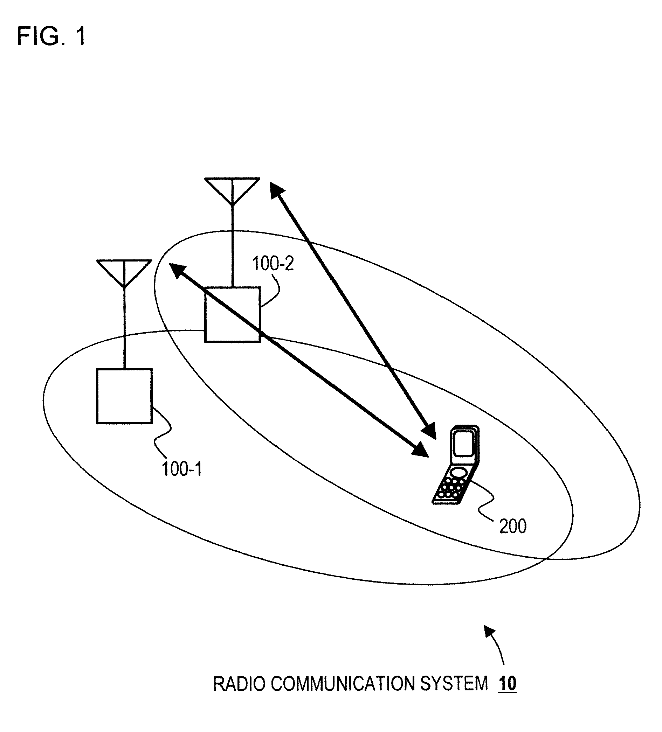

A mode for carrying out the present invention will be described below. Fig. 1 is a view illustrating an example of a structure of a radio communication system 10. The radio communication system 10 includes two base station apparatuses (eNB: evolved Node_B, which will be hereafter referred to as a "base station") 100 - 1 and 100 - 2, and a terminal apparatus (UE: User Equipment which will be hereinafter referred to as a "terminal") 200. The base stations 100 - 1 and 100 - 2 transmit different data and the terminal 200 receives the same (a downward direction). Moreover, the terminal 200 can also transmit different data to the base stations 100 - 1 and 100 - 2 (an upward direction). Both the base stations 100 - 1 and 100 - 2 and the terminal 200 can carry out a so-called CoMP communication. Description will be given in a division into the downward direction (first and second embodiments) and the upward direction (a third embodiment). In 3GPP, a "cell" is defined with the same content as a so-called "sector", and description will be given on the assumption of "cell" = "sector" unless otherwise noted in the following embodiments.

<First Embodiment>

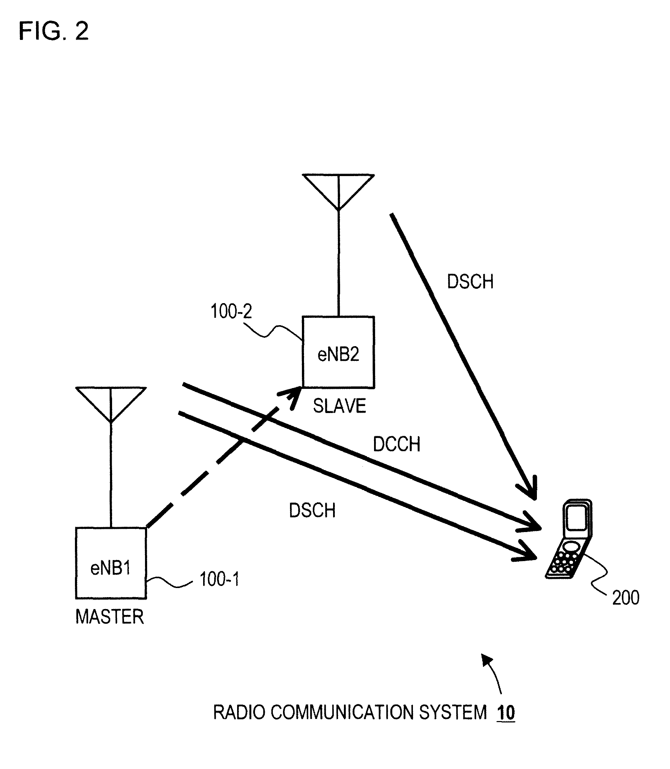

First of all, the downward direction will be given. Fig. 2 is a view illustrating an example of the structure of the radio communication system 10 in the downward direction. In the two base stations 100 - 1 and 100 - 2, the base station 100 - 1 is a master base station and the base station 100 - 2 is a slave base station. The master base station 100 - 1 is a base station which is being connected to the terminal 200 before an execution of a CoMP transmission, for example, and the slave base station 100 - 2 is a base station for executing the CoMP transmission, for example. The master base station 100 - 1 transmits a control signal to the terminal 200. The terminal 200 receives different transmission data (DSCH) which is transmitted from the master base station 100 - 1 and the slave base station 100 - 2 based on the control signal.

<Example of Structure of Master Base Station>

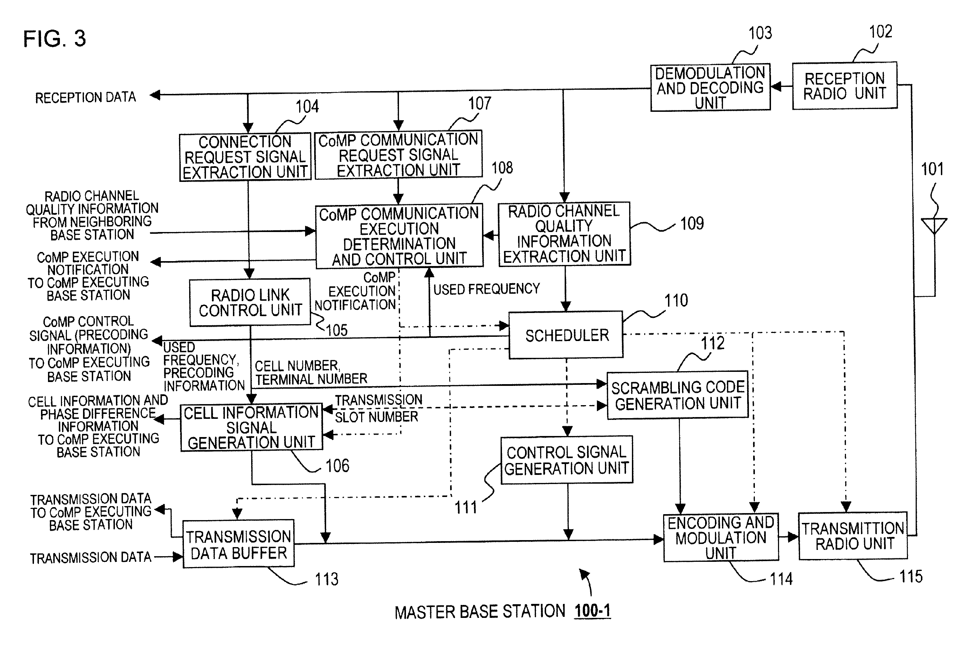

The example of the structure of the master base station 100 - 1 according to the first embodiment will be given. Fig. 3 is a diagram illustrating the master base station 100 - 1.

The master base station 100 - 1 includes an antenna 101, a reception radio unit 102, a demodulation and decoding unit 103, a connection request signal extraction unit 104, a radio link control unit 105, a cell information signal generation unit 106, a CoMP communication request signal extraction unit 107, a CoMP communication execution determination and control unit (hereinafter referred to as a "control unit") 108, a radio channel quality information extraction unit 109, a scheduler 110, a control signal generation unit 111, a scrambling code generation unit 112, a transmission data buffer 113, an encoding and modulation unit 114, and a transmission radio unit 115.

The antenna 101 transmits/receives a radio signal to/from the terminal 200.

The reception radio unit 102 outputs, as a received signal, the radio signal received through the antenna 101.

The demodulation and decoding unit 103 demodulates and decodes the received signal output from the reception radio unit 102.

The connection request signal extraction unit 104 extracts a connection request signal from the received signal which is subjected to the demodulation or the like. The connection request signal is used when the terminal 200 gives a request for a line connection together with the master base station 100 - 1, for example.

When inputting the connection request signal from the connection request signal extraction unit 104, the radio link control unit 105 selects any of cell numbers and terminal numbers which are held (or stored) in an inner part and outputs them to the cell information signal generation unit 106 and the scrambling code generation unit 112, for example.

The cell information signal generation unit 106 generates cell information from the cell number and the terminal number which are output from the radio link control unit 105 and a slot number output from the scheduler 110. The cell information thus generated is transmitted as a cell information signal to the base station for executing the CoMP transmission (for example, the slave base station 100 - 2). Moreover, the cell information signal generation unit 106 also outputs the cell information signal to the encoding and modulation unit 114 in order to transmit the cell information signal to the terminal 200. Furthermore, the cell information signal generation unit 106 transmits, to the slave base station 100 - 2, phase difference information indicative of a phase difference between the scrambling codes generated by the master base station 100 - 1 and the slave base station 100 - 2, respectively. The phase difference indicates a phase difference of the scrambling code generated by the slave base station 100 - 2 from the scrambling code generated by the master base station 100 - 1, for example. The cell information signal generation unit 106 outputs phase difference information to the encoding and modulation unit 114 in order to give a notice of the phase difference information to the terminal 200. The details of the phase difference information will be described below. The cell information signal generation unit 106 previously holds (or stores) the phase difference information, for example.

The CoMP communication request signal extraction unit 107 extracts a CoMP communication request signal from the received signals output from the demodulation and decoding unit 103. The CoMP communication request signal is transmitted from the terminal 200 when the terminal 200 is to carry out the CoMP communication, for example.

The control unit 108 determines whether the CoMP transmission is executed or not, and gives a CoMP transmission execution notice to the slave base station 100 - 2 when the control unit 108 determines that the CoMP transmission is executed. The control unit 108 determines whether the CoMP transmission is executed or not based on radio channel quality output from the radio channel quality information extraction unit 109 and radio channel quality transmitted from the slave base station 100 - 2, for example. The CoMP transmission execution notice is also output to the scheduler 110 and the cell information signal generation unit 106.

The radio channel quality information extraction unit 109 extracts radio channel quality information in the received signals output from the demodulation and decoding unit 103. The radio channel quality information is transmitted from the terminal 200, for example.

The scheduler 110 decides an encoding rate, a modulation method or the like which is to be used for the communication in the downward direction with the terminal 200 based on the radio channel quality information output from the radio channel quality information extraction unit 109 (carries out scheduling). The scheduler 110 outputs, to the control signal generation unit 111, scheduling information about the encoding rate or the like which is decided. Moreover, the scheduler 110 transmits a use frequency and precoding information in the scheduling information as a CoMP control signal to the slave base station 100 - 2, and outputs the slot number to the cell information signal generation unit 106 and the scrambling code generation unit 112. The scheduler 110 controls the encoding and modulation unit 114 and the transmission radio unit 115 in order to carry out an encode processing or the like for the transmission data in accordance with the scheduling information which is decided.

The control signal generation unit 111 generates a control signal including the scheduling information output from the scheduler 110 and outputs the control signal to the encoding and modulation unit 114.

The scrambling code generation unit 112 generates an initial value of a scrambling code based on the slot number output from the scheduler 110, and the cell number and the terminal number which are output from the radio link control unit 105, thereby generating the scrambling code. The details of the scrambling code generation unit 112 will be described below.

The transmission data buffer 113 temporarily stores transmission data to be transmitted from the master base station 100 - 1 to the terminal 200.

The encoding and modulation unit 114 carries out scrambling processing on the transmission data output from the transmission data buffer 113 by using the scrambling code generated by the scrambling code generation unit 112. Moreover, the encoding and modulation unit 114 encodes and modulates the transmission data subjected to the scrambling based on the scheduling information. Although the encoding and modulation unit 114 carries out a processing such as encoding over the cell information and the control signal, the scrambling processing may be executed for them.

The transmission radio unit 115 carries out a weighting processing (or a weight processing) or the like over the transmission data or the like which is output from the encoding and modulation unit 114 in accordance with the precoding information generated by the scheduler 110, for example. Moreover, the transmission radio unit 115 generates a pilot signal (or a known signal), for example. An output from the transmission radio unit 115 is transmitted as a radio signal to the terminal 200 through the antenna 101.

<Example of Structure of Slave Base Station>

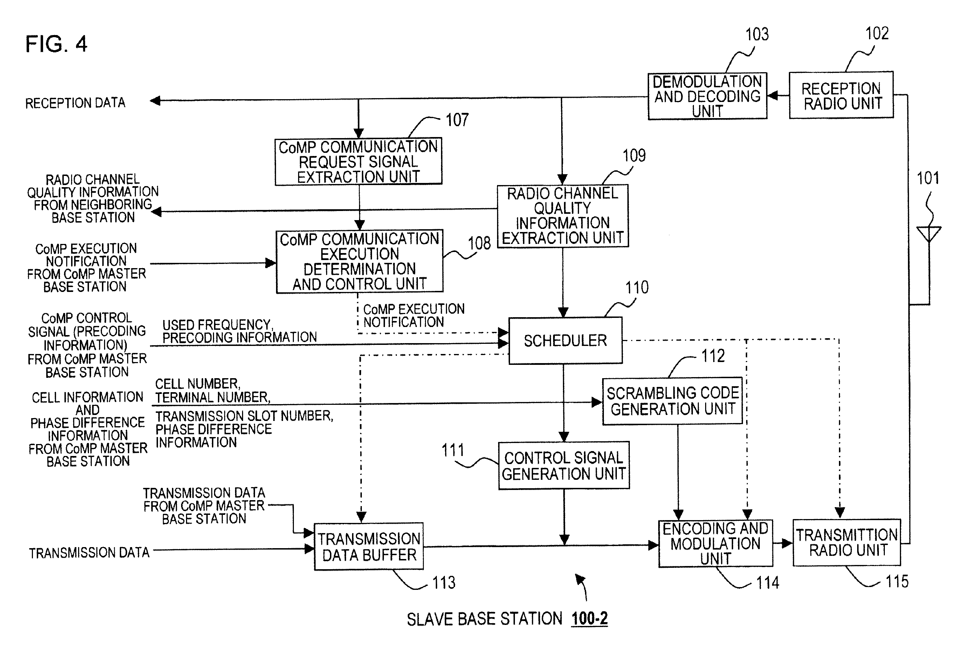

Next, an example of a structure of the slave base station 100 - 2 according to the first embodiment will be described. Fig. 4 is a diagram illustrating the example of the structure of the slave base station 100 - 2. The slave base station 100 - 2 has the same structure as that of the master base station 100 - 1.

When inputting the CoMP communication request signal from the CoMP communication request signal extraction unit 107, and furthermore, receiving the CoMP execution notice from the master base station 100 - 1, the control unit 108 outputs the CoMP execution notice to the scheduler 110.

The scheduler 110 carries out the scheduling in the downward direction based on the radio channel quality information output from the radio channel quality information extraction unit 109. When receiving the CoMP execution notice from the control unit 108 and receiving the CoMP control signal from the master base station 100 - 1, moreover, the scheduler 110 carries out the scheduling for the CoMP transmission. The scheduler 110 controls the encoding and modulation unit 114 and the transmission radio unit 115 in order to carry out the encode processing or the like in accordance with the scheduling.

The scrambling code generation unit 112 inputs the cell information (including the cell number, the terminal number and the slot number) and the phase difference information from the master base station 100 - 1, and generates a scrambling code (for example, a second scrambling code) having a phase difference from the scrambling code (for example, a first scrambling code) generated by the master base station 100 - 1. The details will be described below. The scrambling code generation unit 112 outputs the scrambling code thus generated to the encoding and modulation unit 114.

The encoding and modulation unit 114 carries out the scrambling processing or the like over the transmission data or the like by using the scrambling code.

<Example of Structure of Terminal>

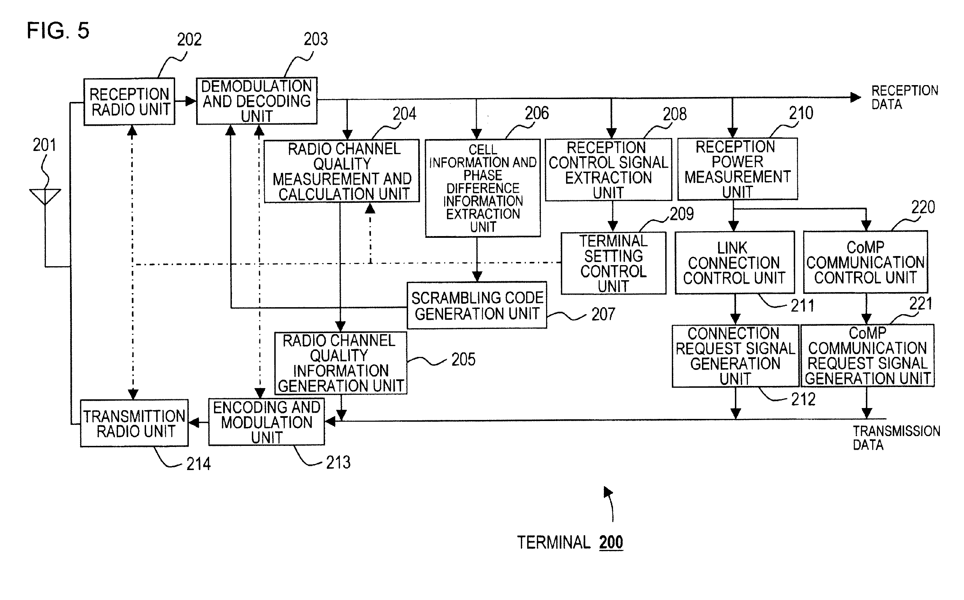

Next, an example of a structure of the terminal 200 will be described. Fig. 5 is a diagram illustrating the example of the structure of the terminal 200.

The terminal 200 includes an antenna 201, a reception radio unit 202, a demodulation and decoding unit 203, a radio channel quality measurement and calculation unit (hereinafter referred to as a calculation unit) 204, a radio channel quality information generation unit 205, a cell information and phase difference information extraction unit (hereinafter referred to as a phase difference information extraction unit) 206, a scrambling code generation unit 207, a reception control signal extraction unit 208, a terminal setting control unit 209, a reception power measurement unit 210, a link connection control unit 211, a connection request signal generation unit 212, an encoding and modulation unit 213, a transmission radio unit 214, a CoMP communication control unit 220, and a CoMP communication request signal generation unit 221.

The antenna 201 transmits/receives a radio signal to/from the respective base stations 100 - 1 and 100 - 2.

The reception radio unit 202 outputs, as a received signal, a radio signal received through the antenna 201.

The demodulation and decoding unit 203 carries out descrambling over a received signal by using a scrambling code generated by the scrambling code generation unit 207 and executes demodulation and decode over the received signal in accordance with a demodulation method or the like which is set by the terminal setting control unit 209.

The calculation unit 204 measures radio quality of each radio channel over a pilot signal or the like which is transmitted from the master base station 100 - 1 or the slave base station 100 - 2. The calculation unit 204 measures the radio channel quality by measuring SINR (Signal to Interference Noise Ratio) of the pilot signal or the like, for example.

The radio channel quality information generation unit 205 generates radio channel quality information based on the radio channel quality output from the calculation unit 204. The radio channel quality information includes CQI (Channel Quality Indicator) or the like, for example. The radio channel quality information thus generated is output to the encoding and demodulation unit 213.

The phase difference information extraction unit 206 extracts cell information and phase difference information from the received signals output from the demodulation and decoding unit 203, and outputs the extracted cell information or the like to the scrambling code generation unit 207.

The scrambling code generation unit 207 generates a scrambling code (for example, a first scrambling code) to be generated in the master base station 100 - 1 based on the cell information transmitted from the master base station 100 - 1. Moreover, the scrambling code generation unit 207 generates a scrambling code (for example, a second scrambling code) to be generated in the slave base station 100 - 2 based on the cell information and the phase difference information which are transmitted from the master base station 100 - 1. The scrambling code generation unit 207 outputs the two scrambling codes thus generated to the demodulation and decoding unit 203.

The reception control signal extraction unit 208 extracts a control signal from the received signals and outputs the control signal to the terminal setting control unit 209.

The terminal setting control unit 209 controls the reception radio unit 202 and the demodulation and decoding unit 203 to enable demodulation, decode or the like of data received from the base stations 1000 - 1 and 100 - 2 in accordance with the scheduling information included in the control signal.

The reception power measurement unit 210 measures a received power of a pilot signal in the received signals, for example, and outputs a result of the measurement to the link connection control unit 211 and the CoMP communication control unit 220.

The link connection control unit 211 decides whether the link of the base stations 100 - 1 and 100 - 2 is connected or not based on the received power. The link connection control unit 211 decides that the link connection is carried out if the received power is equal to or greater than a threshold and decides that the link connection is not carried out if not so, for example. The link connection control unit 211 outputs an instruction signal to the connection request signal generation unit 212 when deciding that the link connection is carried out.

The connection request signal generation unit 212 generates a connection request signal and outputs the connection request signal to the encoding and modulation unit 213 based on the instruction signal.

The CoMP communication control unit 220 outputs an instruction for generating a CoMP communication request signal to the CoMP communication request signal generation unit 221 when the received power is equal to or greater than the threshold, for example.

The CoMP communication request signal generation unit 221 generates a CoMP communication request signal based on the instruction given from the CoMP communication control unit 220 and outputs the CoMP communication request signal to the encoding and modulation unit 213.

The encoding and modulation unit 213 carries out the encode and modulation processing on the radio channel quality information, the connection request signal, the CoMP communication request signal, or the like.

The transmission radio unit 214 carries out a control for the transmitted power or the like over the radio channel quality information subjected to encode or the like, and outputs the radio channel quality information as a radio signal to the antenna 201. The radio channel quality information or the like is transmitted as a radio signal to the base stations 100 - 1 and 100 - 2.

<Example of Structure of Scrambling Code Generation Unit>

Next, an example of structures of the scrambling code generation units 112 and 207 will be described.

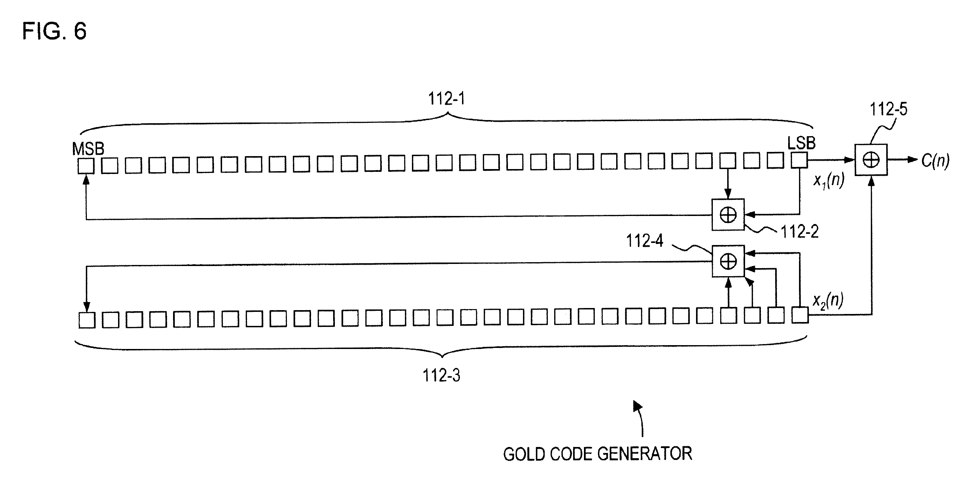

Fig. 6 is a diagram illustrating an example of a structure of a gold code generator which generates a gold code (or a scrambling code) having a length of "31". The gold code generator includes first and second shift registers 112 - 1 and 112 - 3 and first to third exclusive OR circuits 112 - 2, 112 - 4 and 112 - 5. The gold code generator illustrated in Fig. 6 is an example of a structure based on generating polynomials expressed in the Equations 2 to 5.

A generating polynomial for generating a scrambling code with a 1-bit shift from the scrambling code generated in accordance with the generating polynomials expressed in the Equations 2 to 5 can be represented by the following equations.

$$[Equation\ 10]$$

$$c(n) = (x_1(n+1) + x_2(n+1))\bmod 2$$

Moreover, a generating polynomial for generating a scrambling code with a 2-bit shift is as follows.

$$[Equation\ 11]$$

$$c(n) = (x_1(n+2) + x_2(n+2))\bmod 2$$

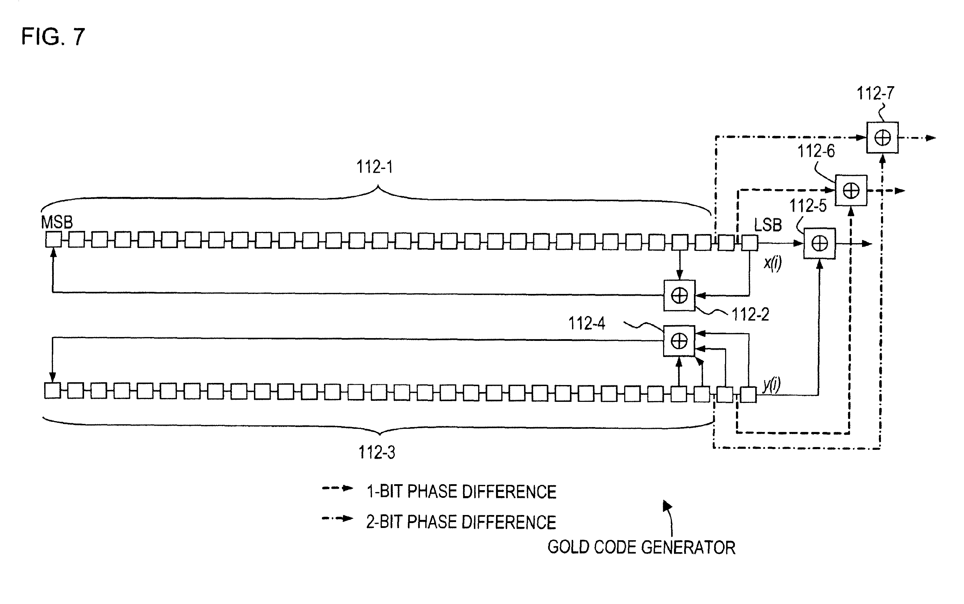

Fig. 7 is a diagram illustrating an example of a structure of a gold code generator which generates a scrambling code with a 1-bit or 2-bit shift (a 1-bit or 2-bit phase difference) with respect to Fig. 6. The gold code generator illustrated in Fig. 7 further includes fourth and fifth exclusive OR circuits 112 - 6 and 112-7.

The fourth exclusive OR circuit 112 - 6 calculates an exclusive OR for an output sent from a register with a 1-bit shift from a register corresponding to LSB in the first shift register 112 - 1 and an output sent from a register with a 1-bit shift from a register corresponding to LSB in the second shift register 112 - 3 as illustrated in a dotted line. The fourth exclusive OR circuit 112 - 6 outputs a scrambling code with a 1-bit shift (a 1-bit phase difference) from an output of the third exclusive OR circuit 112 - 5.

The fifth exclusive OR circuit 112 - 7 calculates an exclusive OR for an output sent from a register with a 2-bit shift from LSB in the first shift register 112 - 1 and an output sent from a register with a 2-bit shift from LSB in the second shift register 112 - 3 as illustrated in a one-dotted chain line. The fifth exclusive OR circuit 112 - 7 outputs a scrambling code with a 2-bit shift (a 2-bit phase difference) from an output of the third exclusive OR circuit 112 - 5.

Furthermore, a generating polynomial of a scrambling code with a 32-bit shift from the scrambling code in Fig. 6 is as follows.

[Equation 12]

$$c(n) = (x_1(n + N_C) + x_2(n + N_C)) \bmod 2$$

[Equation 13]

$$x_1(n + 32) = (x_1(n + 4) + x_1(n + 1)) \bmod 2$$

[Equation 14]

$$x_2(n + 32) = (x_2(n + 4) + x_2(n + 3) + x_2(n + 2) + x_2(n + 1)) \bmod 2$$

Furthermore, a generating polynomial of a scrambling code with a 33-bit shift is as follows.

[Equation 15]

$$c(n) = (x_1(n + N_C) + x_2(n + N_C)) \bmod 2$$

[Equation 16]

$$x_1(n + 33) = (x_1(n + 5) + x_1(n + 2)) \bmod 2$$

[Equation 17]

$$x_2(n + 33) = (x_2(n + 5) + x_2(n + 4) + x_2(n + 3) + x_2(n + 2)) \bmod 2$$

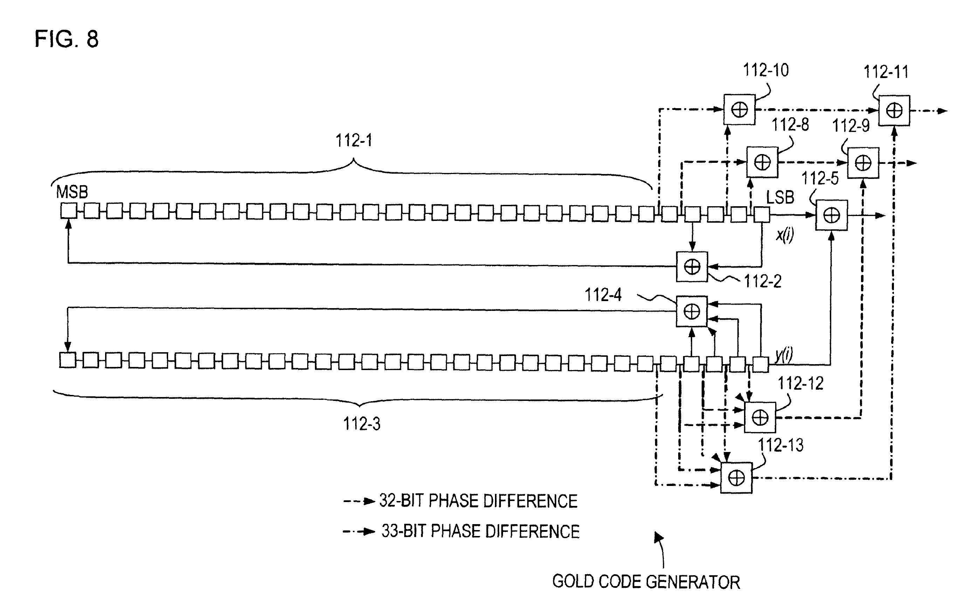

Fig. 8 is a diagram illustrating an example of a structure of a gold code generator which generates scrambling codes with 32-bit and 33-bit shifts. The gold code generator further includes sixth to ninth exclusive OR circuits 112 - 8 and 112 - 11, and tenth to eleventh exclusive OR circuits 112 - 12 to 112 - 13.

The sixth exclusive OR circuit 112 - 8 calculates an exclusive OR for each of outputs sent from a register with a 1-bit shift from the LSB in the first shift register 112 - 1 and a register with a 4-bit shift, and outputs a result of the calculation to the seventh exclusive OR circuit 112 - 9 as illustrated in a dotted line.

The tenth exclusive OR circuit 112 - 12 calculates an exclusive OR for each of outputs sent from each of registers with 1-bit to 4-bit shifts from the LSB in the second shift register 112 - 3, and sends the output to the seventh exclusive OR circuit 112 - 9 as illustrated in a dotted line.

The seventh exclusive OR circuit 112 - 9 calculates an exclusive OR for the outputs of the sixth and tenth exclusive OR circuits 112 - 8 and 112 - 12, and outputs a scrambling code with a 32-bit shift (a 32-bit phase difference) from the output of the third exclusive OR circuit 112 - 5.

A scrambling code with a 33-bit shift is output from an output stage of the ninth exclusive OR circuit 112 - 11, and the eighth and eleventh exclusive OR circuits 112 - 10 and 112 - 13 further calculate an exclusive OR for an output from each register with a 1-bit shift.

In general, when a value having a specific phase in a series generated from an m-degree generating polynomial is represented by a(0), a value a(n) in a series having a phase with an n-bit shift from $\alpha$(0) can be expressed in the following equation.

## [Equation 18]

$$\alpha(n) = \alpha^n \alpha(0)$$

Herein, if $\alpha^n$ is expanded into a sum of the $\alpha$-th power having a degree which is equal to or smaller than the (m - 1) th degree, the following equation is obtained.

## [Equation 19]

$$\alpha(n) = \sum_{i=0}^{m-1} c_i \alpha_i^{\ n} \alpha(0)$$

$c_i$ (i = 0 to m - 1) is a value of "1" or "0" determined by a phase difference of n, and is a tap coefficient sequence.

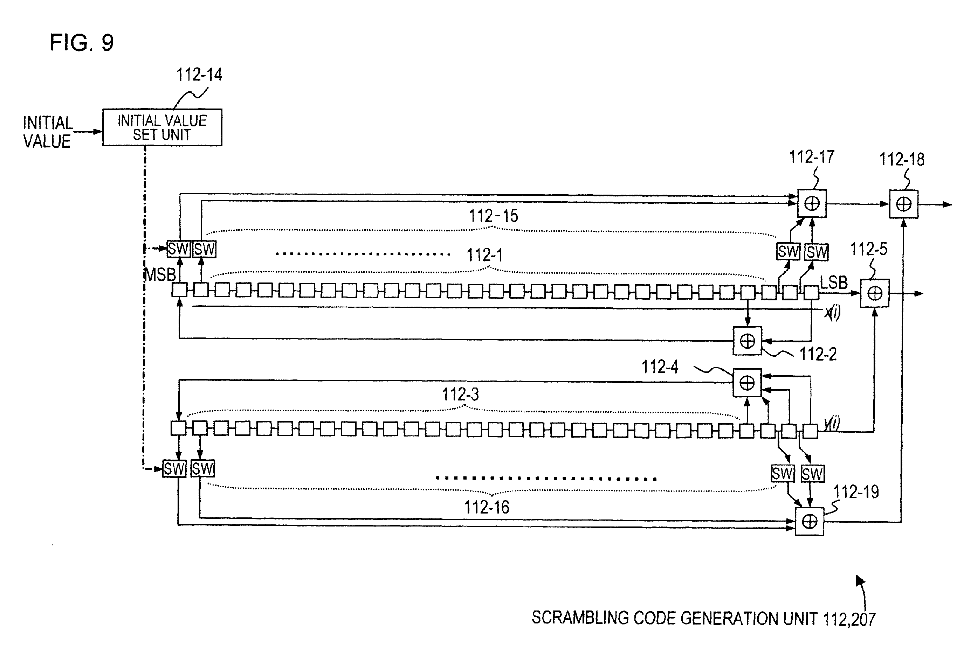

Fig. 9 is a diagram illustrating an example of structures of the scrambling code generation units 112 and 207. Furthermore, there are provided an initial value set unit 112 - 14, first and second switch groups 112 - 15 and 112 - 16, twelfth and thirteenth exclusive OR circuits 112 - 17 and 112 - 18, and a fourteenth exclusive OR circuit 112 - 19.

The initial value set unit 112 - 14 controls ON/OFF of each of switches (or each of taps) in the first and second switch groups 112 - 15 and 118 - 16 based on the cell information (the cell number, the terminal number and the slot number) and the phase difference information. An output of the initial value set unit 112 - 14 corresponds to the tap coefficient sequence $c_i$, for example. An initial value to be input to the initial value set unit 112 - 14 indicates the cell information and the phase difference information, for example.

The twelfth exclusive OR circuit 112 - 17 calculates an exclusive OR for each output of the first switch group 112 - 15 and outputs a result of the calculation to the thirteenth exclusive OR circuit 112 - 18.

The fourteenth exclusive OR circuit 112 - 19 calculates an exclusive OR for each output of the second switch group 112 - 16 and outputs a result of the calculation to the thirteenth exclusive OR circuit 112 - 18.

The thirteenth exclusive OR circuit 112 - 18 calculates an exclusive OR of each of the outputs of the twelfth and fourteenth exclusive OR circuits 112 - 17 and 112 - 19 and outputs a scrambling code having an optional phase difference from the output of the third exclusive OR circuit 112 - 5.

Thus, the scrambling code generation units 112 and 207 synthesize proper components from each stage of the two linear shift registers 112 - 1 and 112 - 3 through an exclusive OR, thereby enabling an output of a scrambling code (or a plurality of scrambling codes) having a phase difference.

For example, the initial value set unit 112 - 14 controls the first and second switch groups 112 - 15 and 112 - 16 based on the cell information of the master base station 100 - 1 so that the third exclusive OR circuit 112 - 5 outputs a scramble code (a first scrambling code) generated by the master base station 100 - 1. Moreover, the initial value set unit 112 - 14 controls the first and second switch groups 112 - 15 and 112 - 16 based on the cell information and the phase difference information of the slave base station 100 - 2. In this case, the thirteenth exclusive OR circuit 112 - 18 outputs a scramble code (for example, a second scrambling code) generated by the slave base station 100 - 2.

<Example of Operation in Downward Direction>

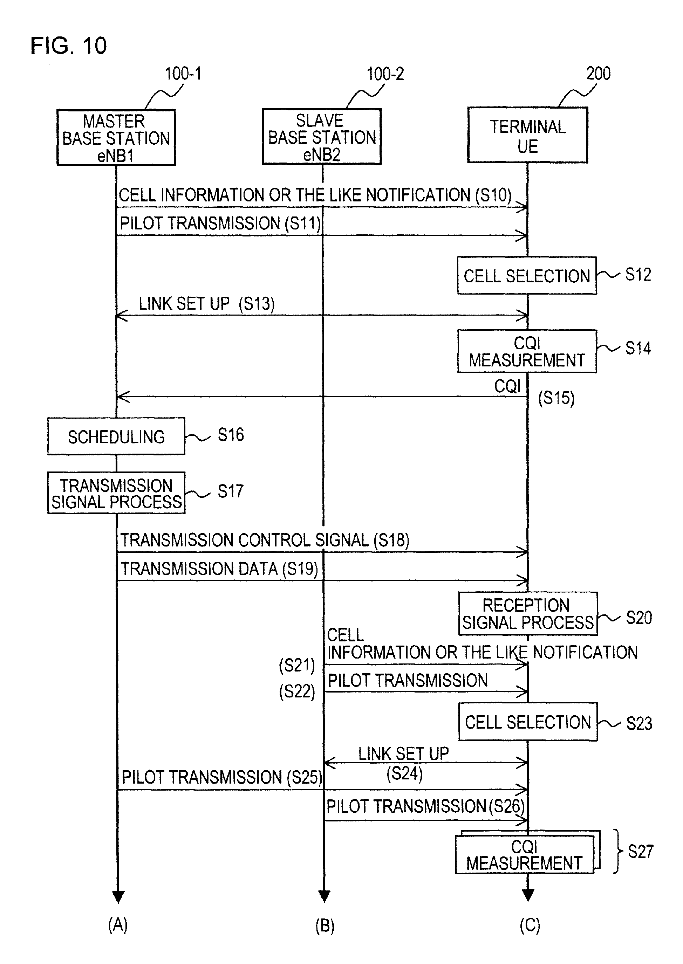

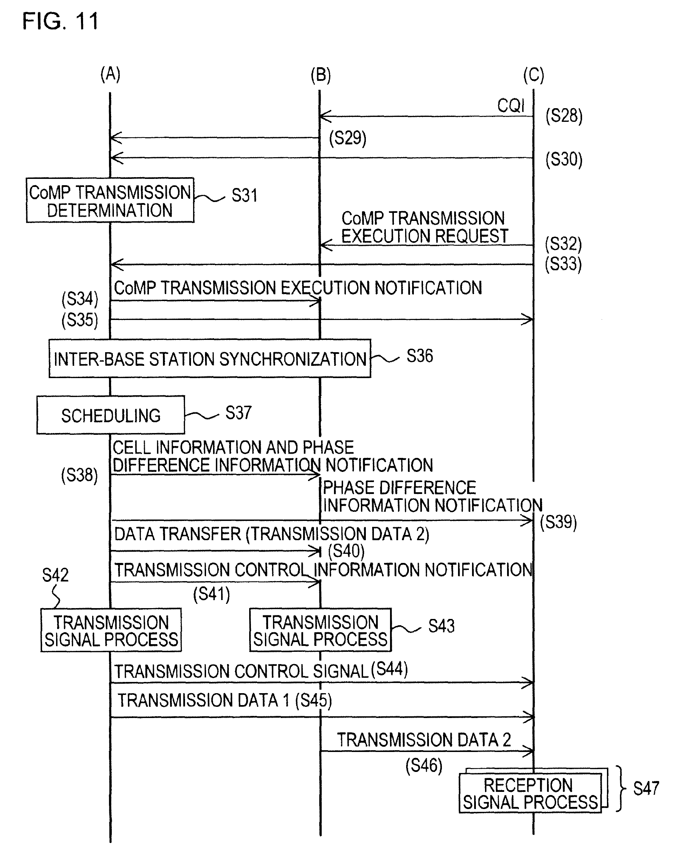

Next, an example of the operation according to the first embodiment will be described. Figs. 10 and 11 are flow charts illustrating the example of the operation. It is assumed that the terminal 200 is positioned in a region which can carry out a communication and connection to both the master base station 100 - 1 and the slave base station 100 - 2.

First of all, the master base station 100 - 1 notifies the cell information or the like to the terminal 200 (S10). For example, the cell information signal generation unit 106 generates the cell information.

Subsequently, the master base station 100 - 1 transmits a pilot signal (S11).

Then, the terminal 200 selects a cell to be a communication target based on the pilot signal which is received or the like (S12), and sets a channel together with the selected cell (S13). For example, the reception power measurement unit 210 of the terminal 200 measures the received power of the pilot signal and the link connection control unit 211 determines the connection of the link to select a cell (for instance, the master base station 100 - 1).

Thereafter, the terminal 200 measures quality of a radio channel to the master base station 100 -1 (for example, CQI) (S14) and transmits radio channel quality information to the master base station 100 - 1 (S15). For example, the calculation unit 204 of the terminal 200 measures the radio channel quality based on the pilot signal.

Next, the master base station 100 - 1 carries out scheduling based on the radio channel quality information

**EP 2 451 230 A1**

(S16). For example, the scheduler 110 of the master base station 100 -1 carries out the scheduling based on the radio channel quality information extracted by the radio channel quality information extraction unit 109.

Subsequently, the master base station 100 -1 executes a transmission signal processing (S17). For example, the encoding and modulation unit 114 reads transmission data stored in the transmission data buffer 113 and carries out a processing such as encode based on scheduling information.

Then, the master base station 100 - 1 transmits a control signal and transmission data to the terminal 200 (S18, S19).

The terminal 200 executes a received signal processing upon receipt of the control signal and the transmission data (S20). For example, the terminal setting control unit 209 controls the reception radio unit 202 and the demodulation and decoding unit 203 to carry out demodulation, decode or the like in accordance with the scheduling information included in the received control signal.

Next, the terminal 200 receives the cell information or the like, and the pilot signal which are given from the slave base station 100 - 2 (S21, S22). Subsequently, the terminal 200 selects the slave base station 100 - 2 as a connection base station (S23) and sets a channel together with the slave base station 100 - 2 (S24).

Then, a processing for the CoMP transmission is carried out between the terminal 200 and the base stations 100 - 1 and 100 - 2. First of all, the terminal 200 receives the pilot signal from the master base station 100 - 1 and the slave base station 100 - 2 respectively (S25, S26), and measures channel quality of each radio channel (S27). At this time, it is also possible to employ different pilot signals which are generated based on the cell number of the master base station 100 - 1 and the original cell number of the slave base station 100 - 2 in order to easily identify the pilot signals sent from the master base station 100 - 1 and the slave base station 100 - 2.

Subsequently, the terminal 200 transmits each measured radio channel quality to the slave base station 100 - 2 and the master base station 100 - 1, respectively (S28, S30).

The slave base station 100 - 2 transmits, to the master base station 100 - 1, the radio channel quality information sent from the terminal 200 (S29). For example, the radio channel quality information extraction unit 109 of the slave base station 100 - 2 transmits, to the master base station 100 - 1, the extracted radio channel quality between the slave base station 100 - 2 and the terminal 200.

Next, the master base station 100 - 1 determines whether the CoMP transmission is enabled or not (S31). For example, the control unit 108 of the master base station 100 - 1 determines that the CoMP communication is enabled when both the radio channel quality sent from the slave base station 100 - 2 and the radio channel quality extracted by the CoMP communication request signal extraction unit 107 are equal to or greater than thresholds. The threshold to be compared with the radio channel quality sent from the master base station 100 - 1 and the threshold to be compared with the radio channel quality sent from the slave base station 100 - 2 may be equal to each other or different from each other. The control unit 108 ends the serial processing when determining that the CoMP transmission is disabled.

Subsequently, the terminal 200 transmits the CoMP transmission execution request to the slave base station 100 - 2 and the master base station 100 - 1 (S32, S33). For example, the CoMP communication control unit 220 of the terminal 200 outputs an instruction for an execution request and the CoMP communication request signal generation unit 221 transmits the request signal.

The master base station 100 - 1 determines that the CoMP transmission is enabled (S31) and transmits a CoMP execution notification to the slave base station 100 - 2 and the terminal 200 (S34, S35) upon receipt of a CoMP execution request from the terminal 200 (S33). For example, the control unit 108 of the master base station 100 - 1 transmits the CoMP execution notification to the slave base station 100 - 2. For example, the control unit 108 outputs the CoMP execution notification to the scheduler 110, and the CoMP execution notification is transmitted as a control signal from the scheduler 110 to the terminal 200.

Then, the master base station 100 - 1 and the slave base station 100 - 2 carry out a processing for synchronizing the base stations (S36). For example, the control units 108 of the master base station 100 - 1 and the slave base station 100 - 2 transmit/receive signals to/from each other to synchronize phases, thereby carrying out the synchronization processing.

Thereafter, the master base station 100 - 1 carries out scheduling for the CoMP transmission (S37). For example, the scheduler 110 executes the scheduling based on the radio channel quality (S29, S30) or the like upon receipt of the CoMP execution notification from the control unit 108. Scheduling information to be generated include a use frequency and precoding information which are to be utilized for the CoMP transmission.

Next, the master base station 100 - 1 transmits cell information and phase difference information to the slave base station 100 - 2 (S38). For example, the cell information signal generation unit 106 of the master base station 100 - 1 transmits cell information of a self station and phase difference information which is previously held, or the like. The phase difference information may be held in the radio link control unit 105.

Subsequently, the master base station 100 - 1 transmits the phase difference information to the terminal 200 (S39). For example, the cell information signal generation unit 106 of the master base station 100 - 1 transmits the generated phase difference information through the encoding and modulation unit 114 or the like.

11

Then, the master base station 100 - 1 transfers transmission data (for example, transmission data 2) to the slave base station 100 - 2 (S40). For example, the scheduler 110 of the master base station 100 - 1 reads a part of the transmission data stored in the transmission data buffer 113 (for example, transmission data 2) and transmits the same transmission data to the slave base station 100 - 2. The transmission data buffer 113 of the slave base station 100 - 2 stores the transmission data which is transmitted from the master base station 100 - 1. The transmission data 1 and the transmission data 2 are varied every cell, for example.

Thereafter, the master base station 100 - 1 notifies the slave base station 100 - 2 of transmission control information (S41). For example, the scheduler 110 transmits the scheduling information (S37) including the precoding information or the like as the transmission control information to the slave base station 100 - 2.

Next, the master base station 100 - 1 and the slave base station 100 - 2 carry out a transmission signal processing (S41, S42). For example, the scrambling code generation unit 112 of the master base station 100 - 1 generates a scrambling code (for example, a first scrambling code) based on the cell information of the self station. The encoding and modulation unit 114 of the master base station 100 - 1 carries out scrambling processing on transmission data (for example, transmission data 1) by using the scrambling code. Moreover, the scrambling code generation unit 112 of the slave base station 100 - 2 generates a scrambling code (for example, a second scrambling code) based on the cell information and the phase difference information which are transmitted from the master base station 100 - 1. The encoding and modulation unit 114 of the slave base station 100 - 2 carries out the scrambling processing on the transmission data 2 by using the generated scrambling code.

Subsequently, the master base station 100 - 1 transmits the control signal and the transmission data (for example, the transmission data 1) to the terminal 200 (S44, S45). The control signal also includes the use frequency and the precoding information in addition to an encoding rate to be used in the CoMP transmission or the like, and may include the cell information generated by the cell information signal generation unit 106.

Then, the slave base station 100 - 2 transmits, to the terminal 200, the transmission data (for example, the transmission data 2) which is different from the transmission data which is transmitted from the master base station 100 - 1 (S46). For example, the transmission data 1 and the transmission data 2 are subjected to weighting and are thus transmitted in accordance with the precoding information.

Thereafter, the terminal 200 executes received signal processing on the transmission data sent from the master base station 100 - 1 and the slave base station 100 - 2 (S47). For example, the terminal setting control unit 209 of the terminal 200 controls the reception radio unit 202 and the demodulation and decoding unit 203 in accordance with the scheduling information included in the control signal (S43). At this time, the scrambling code generation unit 207 of the terminal 200 generates a scrambling code (for example, a first scrambling code) based on the cell information (S10 or S43) and outputs the scrambling code to the demodulation and decoding unit 203, for instance. Moreover, the scrambling code generation unit 207 generates a scrambling code (for example, a second scrambling code) based on the cell information and the phase difference information (S39) and outputs the scrambling code to the demodulation and decoding unit 203. The demodulation and decoding unit 203 carries out descrambling processing on the transmission data (for example, the transmission data 1) sent from the master base station 100 - 1 by using the first scrambling code, for example. Moreover, the demodulation and decoding unit 203 carries out the descrambling processing on the transmission data (for example, the transmission data 2) sent from the slave base station 100 - 2 by using the second scrambling code, for example.

In the first embodiment, thus, the master base station 100 - 1 generates the scrambling code based on the cell information of the master base station 100 - 1 when the CoMP transmission is carried out, and furthermore, the slave base station 100 - 2 generates a scrambling code shifted corresponding to phase difference information on the basis of the scrambling code based on the cell information received from the master base station 100 - 1. A notice of the cell information and the phase difference information in the master base station 100 - 1 is also given to the terminal 200, and the first scrambling code is generated based on the cell information and the second scrambling code is generated with a shift corresponding phase difference information based thereon, and the descrambling processing is thus carried out. As compared with the case in which 2 - system scrambling codes are generated independently based on the cell information of the base station 100 - 1 and the cell information of the base station 100 - 2 in the terminal 200 to carry out the descrambling processing, consequently, the processing of the terminal 200 is relieved more greatly. Furthermore, a power consumption of the terminal 200 can also be reduced.

Moreover, the master base station 100 - 1 transmits the precoding information to the slave base station 100 - 2 (S44), and the two base stations 100 - 1 and 100 - 2 transmit different data to the terminal 200 based on the precoding information. Even if the different data are transmitted from the two base stations 100 - 1 and 100 - 2, accordingly, the terminal 200 can carry out the reception processing (S47) based on the precoding information included in the control signal. Therefore, it is also possible to prevent an interference of the two different data.

<Second Embodiment>

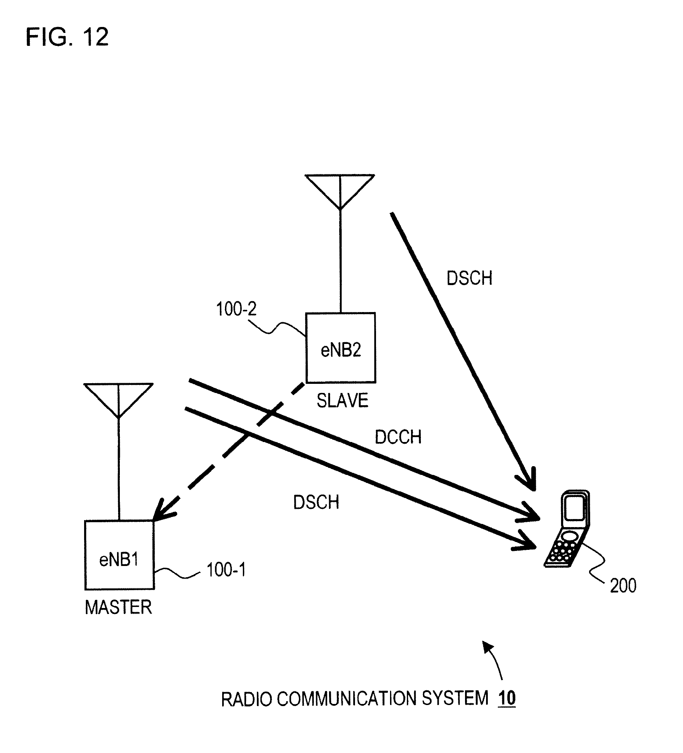

Next, a second embodiment will be described. The second embodiment describes another example in the downward direction. Fig. 12 is a view illustrating an example of a structure of a radio communication system 10 according to the second embodiment. A slave base station 100 - 2 transmits cell information to a master base station 100 - 1. The master base station 100 - 1 calculates a phase difference between scrambling codes to be used in the respective base stations 100 - 1 and 100 - 2 based on the cell information of the slave base station 100 - 2 and cell information of a self station.

<Example of Structure of Master Base Station>

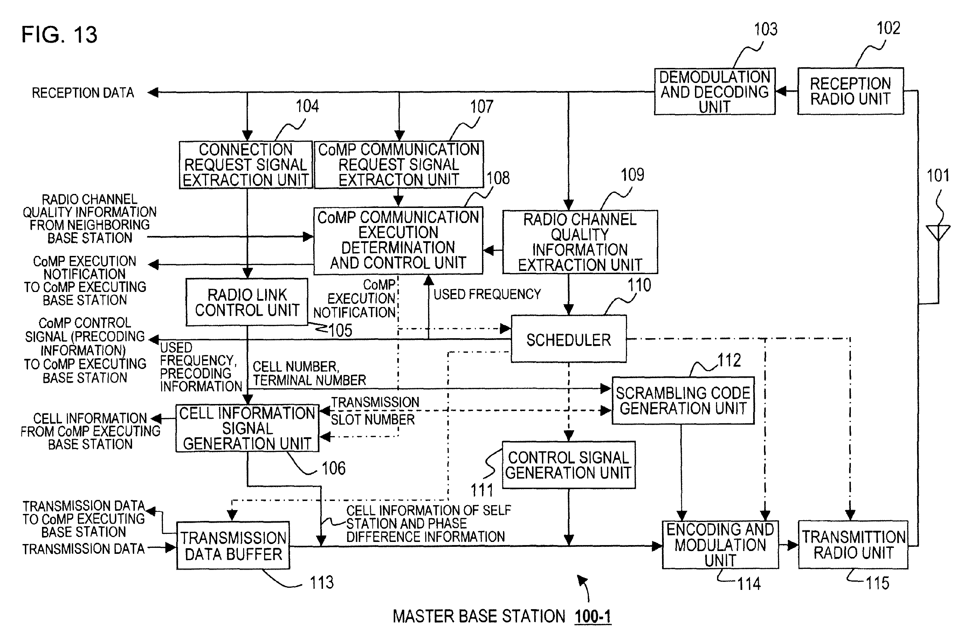

Fig. 13 is a diagram illustrating an example of a structure of the master base station 100 - 1 according to the second embodiment.
The cell information signal generation unit 106 receives cell information from a CoMP execution base station (for example, the slave base station 100 - 2). Moreover, the cell information signal generation unit 106 generates the cell information of the self station based on a cell number and a terminal number which are output from the radio link control unit 105 and a slot number output from the scheduler 110. The cell information signal generation unit 106 calculates the phase difference between the scrambling codes to be generated in the master base station 100 - 1 and the slave base station 100 - 2 based on the two cell information of the respective base stations 100 - 1 and 100 - 2. The details of the calculation will be described below. The cell information signal generation unit 106 outputs phase difference information together with the cell information of the self station to the encoding and modulation unit 114.
The scrambling code generation unit 112 generates a scrambling code (for example, a first scrambling code) based on the cell information of the self station.

<example of Structure of Slave Base Station>

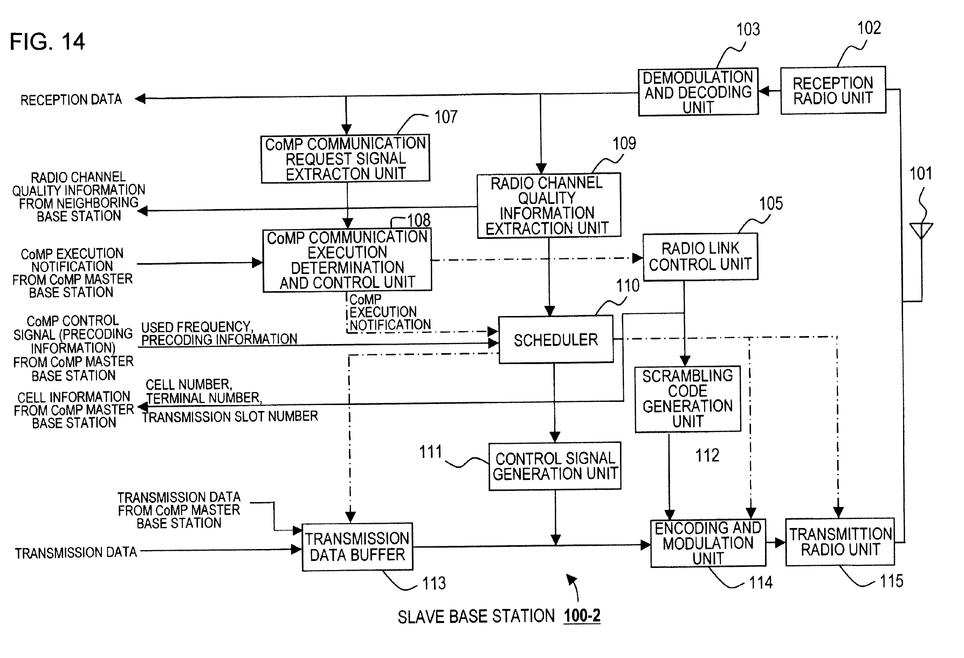

Fig. 14 is a diagram illustrating an example of a structure of the slave base station 100 - 2 according to the second embodiment.
When inputting a CoMP execution notice from the control unit 108, for example, the radio link control unit 105 transmits, as cell information to the master base station 100 - 1, a cell number, a terminal number and a slot number which are previously held. Moreover, the radio link control unit 105 outputs the cell information to the scrambling code generation unit 112.
The scrambling code generation unit 112 generates the scrambling code of the slave base station 100 - 2 to be the self station based on the cell information, and outputs the scrambling code to the encoding and modulation unit 114.
An example of a structure of the terminal 200 is the same as that of the first embodiment (Fig. 5).

<Calculation of Phase Difference Information>

Next, a calculation of phase difference information will be described. For example, the cell information signal generation unit 106 of the master base station 100 - 1 executes the calculation. The calculation is carried out in the following manner, for example.
In other words, the master base station 100 - 1 calculates an initial value of the scrambling code generated from the cell information of the self station as a column vector having n rows and one column $(x_1(0)\ x_2(0)\ ...\ x_n(0))$. The master base station 100 - 1 obtains a scrambling code with a 1-bit shift from the initial value and a scrambling code with a 2-bit shift as a column vector $(x_1(1)\ x_2(1)\ \cdots\ x_n(1))$ and a column vector $(x_1(2)\ x_2(2)\ \cdots\ x_n(2))$, respectively. Furthermore, the master base station 100 - 1 obtains a scrambling code with an n-bit shift as a column vector $(x_1(n)\ x_2(n)\ \cdots\ x_n(n))$. The master base station 100 - 1 obtains a matrix X having n rows and n columns from n sets of column vectors. The matrix X is obtained as follows.

[Equation 20]

$$X = \begin{pmatrix} x_1(0) & x_1(1) & \cdots & x_1(n) \\ x_2(0) & x_2(1) & \cdots & x_2(n) \\ \vdots & \vdots & \vdots & \vdots \\ x_n(0) & x_n(1) & \cdots & x_n(n) \end{pmatrix}$$

Similarly, the master base station 100 - 1 obtains an initial value of the scrambling code generated based on the cell information of the slave base station 100 - 2 as a column vector (y1 (0) y2 (0) ⋯ yn (0)). Thus, a matrix Y having n rows and n columns which is constituted by n sets of column vectors is obtained. The matrix Y is obtained as follows.

[Equation 21]

$$Y = \begin{pmatrix} y_1(0) & y_1(1) & \cdots & y_1(n) \\ y_2(0) & y_2(1) & \cdots & y_2(n) \\ \vdots & \vdots & \vdots & \vdots \\ y_n(0) & y_n(1) & \cdots & y_n(n) \end{pmatrix}$$

Herein, it is assumed that the matrix Y is a scramble code obtained by advancing the matrix X by a certain phase. The master base station 100 - 1 executes the following calculation in order to obtain a matrix A which uniquely determines a phase relationship thereof.

[Equation 22]

$$Y = A \bullet X$$

$$A = A \bullet X \bullet X^{-1} = Y \bullet X^{-1}$$

The matrix A determines a phase difference between two scrambling codes, and the master base station 100 - 1 executes the calculation of the Equation 22, thereby obtaining the phase difference. The cell information signal generation unit 106 previously holds (or stores), as a table, all of combinations of the scrambling codes, and furthermore, a result of the calculation, and the like, for example. The cell information signal generation unit 106 may fetch and output, from the table, a tap coefficient (phase difference information) giving the phase difference between the two scrambling codes to optional cell information. The cell information signal generation unit 106 holds the table, for example.

<Example of Operation in Downward Direction>

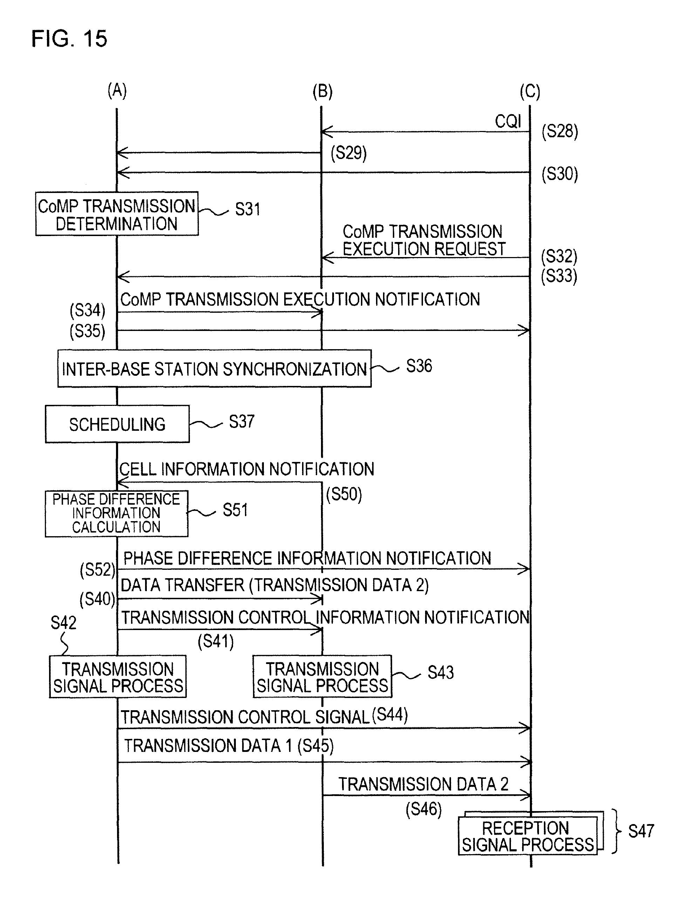

Next, an example of an operation according to the second embodiment will be described. Figs. 10 and 15 are flow charts illustrating the example of the operation. S10 to S37 are the same as those in the first embodiment.

Subsequently, the slave base station 100 - 2 notifies the master base station 100 - 1 of the cell information of a self station (S50 in Fig. 15). For example, the radio link control unit 105 of the slave base station 100 - 2 carries out the notification.

Next, the master base station 100 - 1 calculates phase difference information (S51). For example, the cell information signal generation unit 106 of the master base station 100 - 1 calculates the phase difference information by using a table or the like.

Then, the master base station 100 - 1 notifies the terminal 200 of the calculated phase difference information (S52). For example, the cell information signal generation unit 106 of the master base station 100 - 1 notifies the terminal 200 of the calculated phase difference information through the encoding and modulation unit 114 or the like.

Thereafter, the master base station 100 - 1 transmits transmission data (for example, transmission data 2) and transmission control information to the slave base station 100 - 2 (S40, S41), and each of the base stations 100 - 1 and 100 - 2 carries out a transmission signal processing (S42, S43). For example, each of the base stations 100 - 1 and 100 - 2 generates a scrambling code based on the cell information of the self station, thereby executing the scrambling processing.

Next, the master base station 100 - 1 transmits a control signal and transmission data (for example, transmission data 1) to the terminal 200 (S44, S45).

Subsequently, the slave base station 100 - 2 transmits the transmission data (for example, the transmission data 2) to the terminal 200 (S46).

Then, the terminal 200 receives different transmission data sent through the CoMP transmission from each of the base stations 100 - 1 and 100 - 2, thereby executing a received signal processing (S47). For example, the phase difference information extraction unit 206 of the terminal 200 extracts phase difference information and outputs the phase difference information to the scrambling code generation unit 207. The scrambling code generation unit 207 generates a scrambling code (for example, a first scrambling code) from the cell information (S10 or the like) of the master base station 100 - 1 and outputs the scrambling code to the demodulation and decoding unit 203. Moreover, the scrambling code generation unit 207 generates a scrambling code (for example, a second scrambling code) based on the cell information (S10 or the like) of the master base station 100 - 1 and the phase difference information (S52) and outputs the scrambling code to the demodulation and decoding unit 203. The demodulation and decoding unit 203 carries out a descrambling processing for the transmission data (for example, the transmission data 1) sent from the master base station 100 - 1 by using the first scrambling code. Moreover, the demodulation and decoding unit 203 carries out the descrambling processing for the transmission data (for example, the transmission data 2) sent from the slave base station 100 - 2 by using the second scrambling code.

Also in the second embodiment, thus, the master base station 100 - 1 calculates the phase difference in the scrambling code generated by the slave base station 100 - 2 and transmits the phase difference to the terminal 200 in the CoMP transmission. Accordingly, the terminal 200 can generate a scrambling code having a phase difference previously. As compared with the case in which a two-systematic scrambling code is generated independently based on the cell information of the base station 100 - 1 and the cell information of the base station 100 - 2 in the terminal 200 to carry out the descrambling processing, therefore, the radio communication system 10 can relieve the processing of the terminal 200, thereby reducing a power consumption.

<Third Embodiment>

Next, a third embodiment will be described. The third embodiment describes an example of an upward direction in which data is transmitted from a terminal 200 to base stations 100 - 1 to 100 - 2.

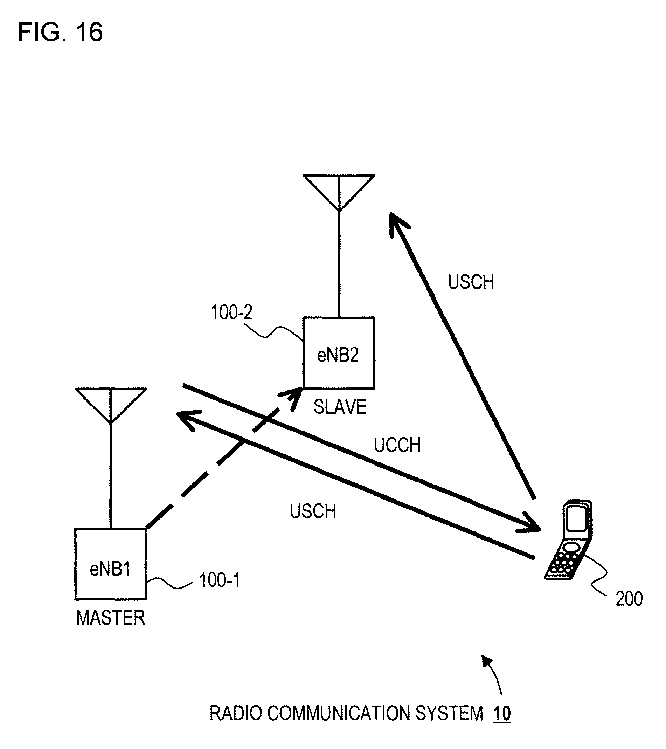

Fig. 16 is a view illustrating an example of a structure of a radio communication system 10 according to the third embodiment. The master base station 100 - 1 transmits a control signal to the terminal 200. The terminal 200 transmits different transmission data (USCH) to the master base station 100 - 1 and the slave base station 100 - 2 based on the control signal which is received.

<Example of Structure of Master Base Station>

Next, description will be given to an example of a structure of the master base station 100 - 1 according to the third embodiment.

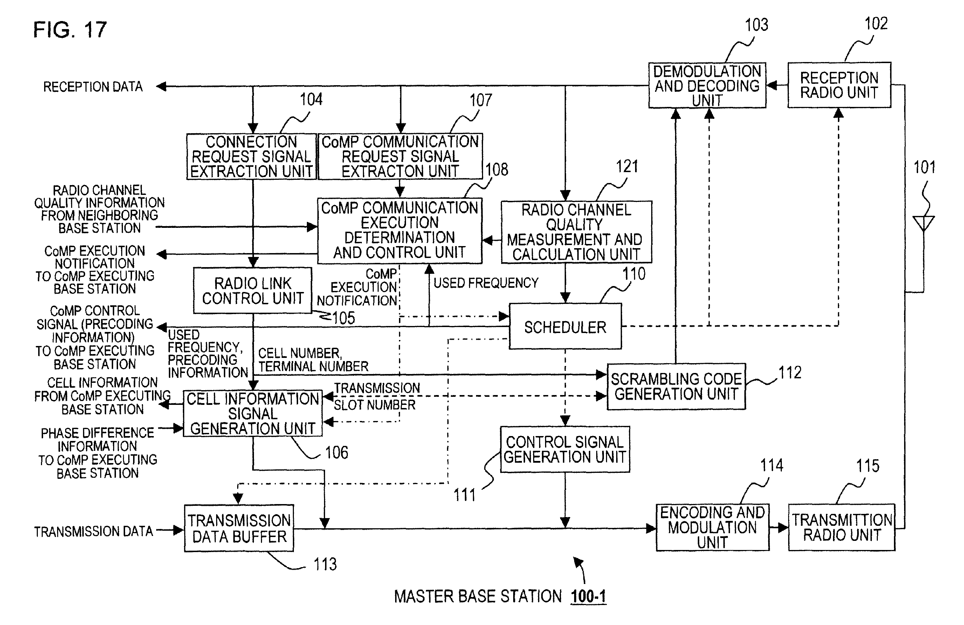

Fig. 17 is a diagram illustrating the example of the structure of the master base station 100 - 1.

The master base station 100 - 1 further includes a radio channel quality measurement and calculation unit (hereinafter referred to as a calculation unit) 121. The calculation unit 121 measures a radio channel quality between the calculation unit 121 and the terminal 200, thereby measuring a radio channel quality (for example, CQI) based on a pilot signal or the like which is transmitted from the terminal 200.

Moreover, the scheduler 110 of the master base station 100 - 1 controls the demodulation and decoding unit 103 and the reception radio unit 102 in accordance with scheduling information which is generated in order to carry out scheduling in the upward direction.

Furthermore, the scrambling code generation unit 112 outputs a scrambling code which is generated to the demodulation and decoding unit 103 in order to carry out descrambling processing on the transmission data sent from the terminal 200, or the like.

<Example of Structure of Slave Base Station>

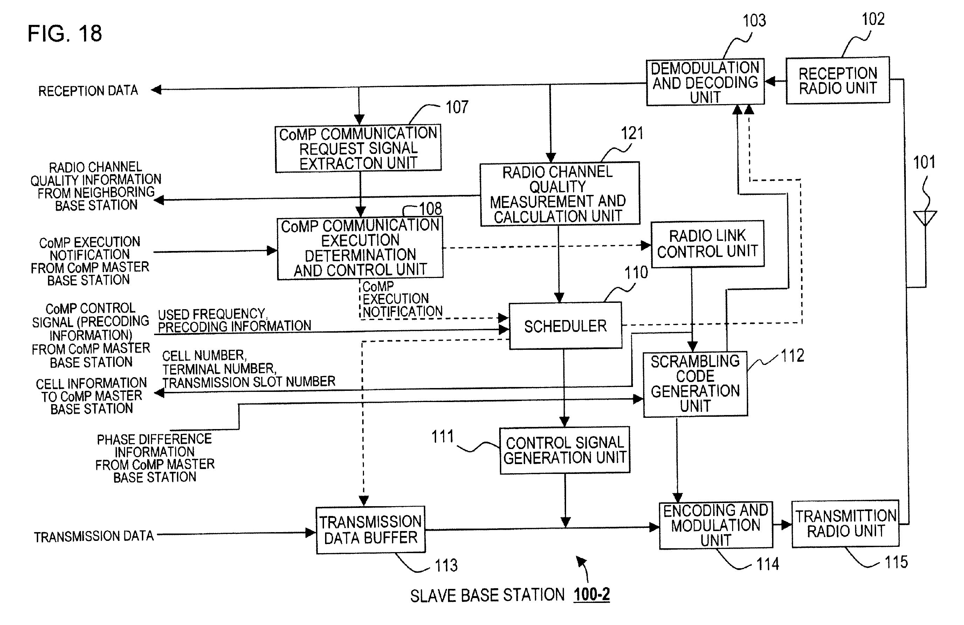

Next, description will be given to an example of a structure of the slave base station 100 - 2 according to the third embodiment. Fig. 18 is a diagram illustrating the example of the structure of the slave base station 100 - 2.

The slave base station 100 - 2 further includes the calculation unit 121.

Moreover, the scheduler 110 of the slave base station 100 - 2 controls the demodulation and decoding unit 103 and the reception radio unit 102 in accordance with the scheduling information in order to carry out the scheduling in the upward direction.

In addition, the scrambling code generation unit 112 also outputs a generated scrambling code to the demodulation and decoding unit 103 in order to carry out the descrambling processing on the transmission data sent from the terminal 200, or the like.

<Example of Structure of Terminal>

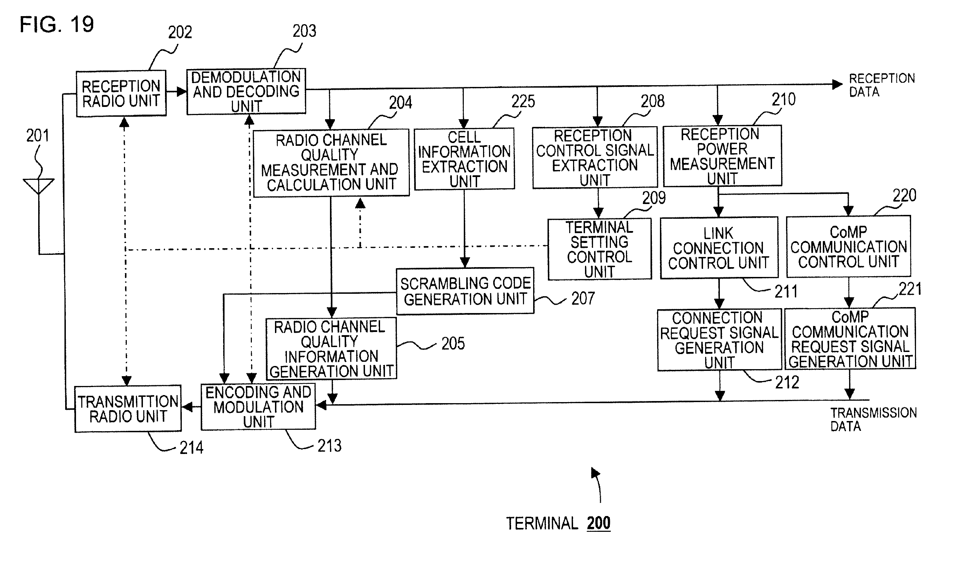

Next, description will be given to an example of a structure of the terminal 200 according to the third embodiment. Fig. 19 is a diagram illustrating the example of the structure of the terminal 200.

The terminal 200 further includes a cell information extraction unit 225. The cell information extraction unit 225 extracts the cell information transmitted from the base stations 100 - 1 and 100 - 2 and outputs the cell information to the scrambling code generation unit 207, for example.

The scrambling code generation unit 207 generates a scrambling code based on cell information (information including a cell number, a terminal number and a slot number) transmitted from the master base station 100 - 1, for example. The scrambling code generation unit 207 outputs the generated scrambling code (for example, a first scrambling code) to the encoding and modulation unit 213.

The terminal setting control unit 209 controls the encoding and modulation unit 213 to carry out a processing such as encode in accordance with a control signal over the transmission data to be sent to the base stations 100 - 1 and 100 - 2, or the like. Moreover, the terminal setting control unit 209 controls the transmission radio unit 214 in accordance with precoding information included in the control signal in such a manner that different transmission data are subjected to weighting and are thus transmitted to the base stations 100 - 1 and 100 - 2, for example.

<Example of Structure of Scrambling Code Generation Unit>

The scrambling code generation units 112 and 207 of the base stations 100 - 1 and 100 - 2 and the terminal 200 are the same as those in the first embodiment (for example, Fig. 9).

<Example of Operation in Upward Direction>

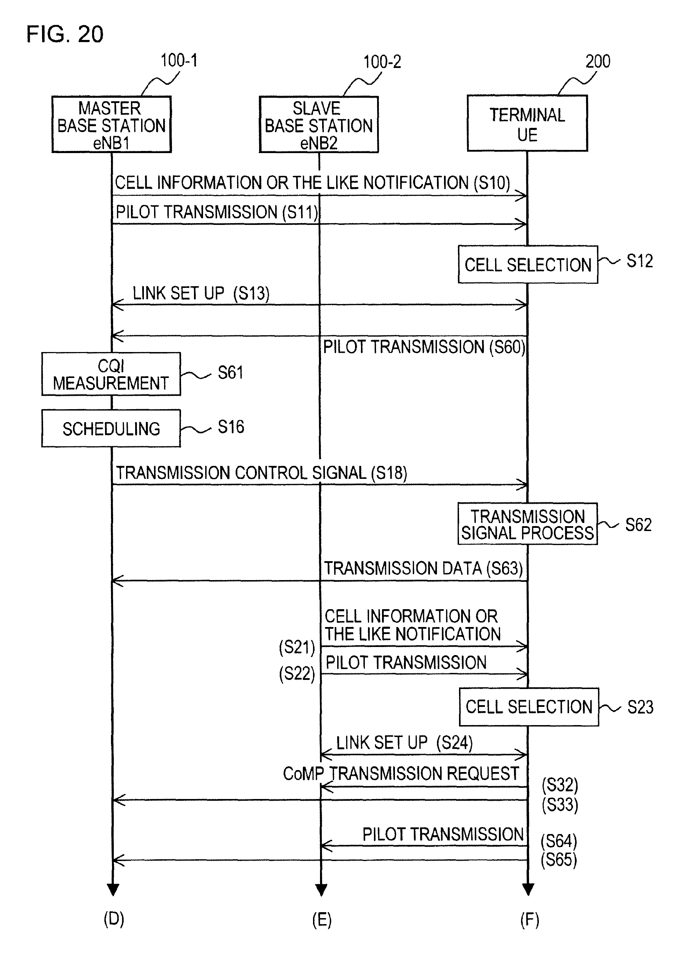

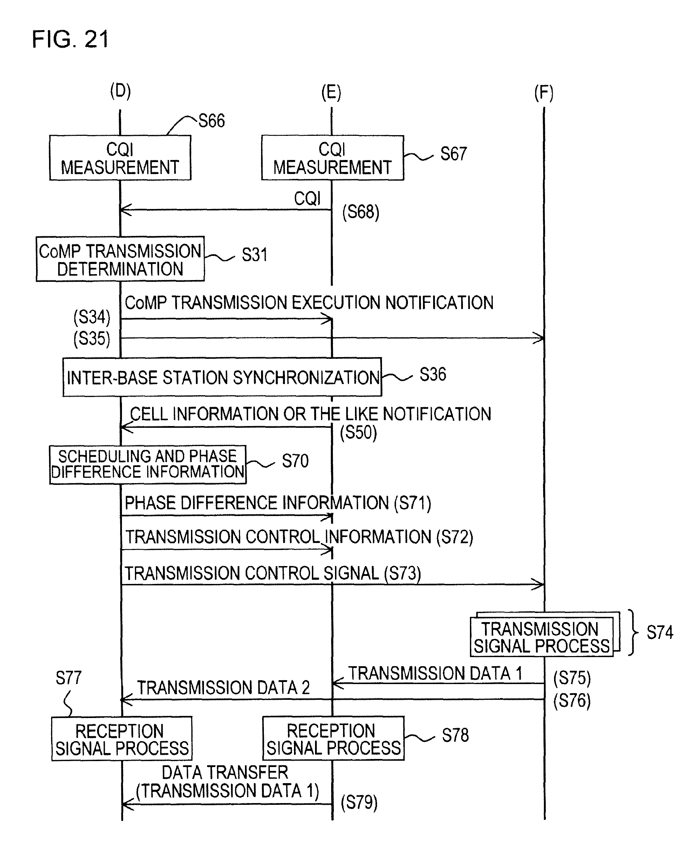

Next, description will be given to an example of an operation according to the third embodiment. Figs. 20 and 21 are flow charts illustrating the example of the operation.

After a link is set up between the master base station 100 - 1 and the terminal 200 (S10 to S13), the terminal 200 transmits a pilot signal to the master base station 100 - 1 (S60). For example, the transmission radio unit 214 of the terminal 200 generates and transmits the pilot signal. The cell information (S10) to be transmitted from the master base station 100 - 1 may include cell information generated in cell information signal generation unit 106.

Subsequently, the master base station 100 - 1 measures a radio channel quality (for example, CQI) in the upward direction based on the pilot signal (S61). For example, a measurement or the like is carried out in the calculation unit 121 of the master base station 100 - 1.

Next, the master base station 100 - 1 carries out scheduling in the upward direction based on the radio channel quality which is measured (S16). For example, the scheduler 110 carries out the scheduling based on the radio channel quality output from the calculation unit 121.

Then, the master base station 100 - 1 transmits a control signal including the scheduling information in the upward direction (S18) and the terminal 200 carries out a transmission signal processing based on the control signal (S62). For example, the control signal generation unit 111 of the master base station 100 - 1 generates the control signal including the scheduling information and transmits the control signal through the encoding and modulation unit 114 or the like. Moreover, the encoding and modulation unit 213 of the terminal 200 carries out encode and modulation processing on the transmission data in accordance with the scheduling information included in the received control signal.

Thereafter, the terminal 200 transmits the transmission data to the master base station 100 - 1 (S63).

Next, the terminal 200 executes a processing such as the link set-up between the terminal 200 and the slave base station 100 - 2 (S21 to S24). Then, a processing for the CoMP transmission is carried out between the terminal 200 and the base stations 100 - 1 and 100 - 2.

First of all, the terminal 200 transmits a CoMP transmission execution request to each of the base stations 100 - 1 and 100 - 2 (S32 to S33).

Subsequently, the terminal 200 transmits a pilot signal to each of the base stations 100 - 1 and 100 - 2 (S64, S65).

Then, each of the base stations 100 - 1 and 100 - 2 measures each radio channel quality (S66, S67). For example, the calculation units 121 of the base stations 100 - 1 and 100 - 2 measure the radio channel quality.

Thereafter, the slave base station 100 - 2 transmits the measured radio channel quality to the master base station 100 - 1 (S68). For example, the calculation unit 121 of the slave base station 100 - 2 transmits the measured radio channel quality to the master base station 100 - 1.

Next, the master base station 100 - 1 determines the CoMP transmission based on two radio channel qualities (S31). For example, it is determined that the control unit 108 carries out the CoMP transmission when both of the two radio channel qualities are equal to or higher than a threshold. The threshold to be compared with the radio channel quality which is measured and computed by the master base station 100 - 1 and the threshold to be compared with the radio channel quality which is measured and computed by the slave base station 100 - 2 may be equal to each other or different from each other.

The master base station 100 - 1 transmits the CoMP transmission execution notification to the slave base station 100 - 2 and the terminal 200 when the CoMP transmission is to be executed (S34 to S35).

Subsequently, the master base station 100 - 1 carries out a synchronization processing between the master base station 100 - 1 and the slave base station 100 - 2 (S36).

Subsequently, the slave base station 100 - 2 notifies the master base station 100 - 1 of cell information of a self station in the same manner as in the second embodiment (S50).

Then, the master base station 100 - 1 carries out the scheduling for the CoMP transmission and computes phase difference information in the same manner as in the second embodiment (S70). The computation of the phase difference information is carried out in the cell information signal generation unit 106 of the master base station 100 - 1 in the same manner as in the second embodiment, for example.

Thereafter, the master base station 100 - 1 transmits the computed phase difference information to the slave base station 100 - 2 in the same manner as in the second embodiment (S71).

Next, the master base station 100 - 1 transmits the transmission control information including the scheduling information (S37) in the upward direction to the slave base station 100 - 2 (S72) and transmits the control signal to the terminal 200 (S73). The transmission control information and the control signal also include a user frequency and precoding information.

Subsequently, the terminal 200 carries out a transmission signal processing (S74). For example, the scrambling code generation unit 207 generates the scrambling code (for example, the first scrambling code) based on the cell information (S10, S43 or the like) from the master base station 100 - 1 and outputs the scrambling code to the encoding and modulation unit 213. The encoding and modulation unit 213 carries out the scrambling processing by using the first scrambling code, for example, over the different transmission data (for example, the transmission data 1 and the transmission data 2). The two different data subjected to the scrambling processing by using the same scrambling code are transmitted to the respective base stations 100 - 1 and 100 - 2 (S75, S76). Moreover, the terminal setting control unit 209 of the terminal 200 controls the encoding and modulation unit 213 in order to carry out a processing such as encode in accordance with the scheduling information. Furthermore, the terminal setting control unit 209 may control the transmission radio unit 214 in such a manner that the transmission data subjected to weighting in accordance with the precoding information included in the control signal is output.

Then, the master base station 100 - 1 carries out a received signal processing (S77). For example, the scrambling code generation unit 112 of the master base station 100 - 1 generates the scrambling code based on the cell information of the self station and outputs the scrambling code to the demodulation and decoding unit 103. The demodulation and decoding unit 103 carries out a descrambling processing or the like over the transmission data (for example, the transmission data 2) by using the scrambling code.

Moreover, the slave base station 100 - 2 also carries out the received signal processing (S78). For example, a phase of the scrambling code is shifted based on the cell information of the self station and the phase difference information so that the scrambling code generation unit 112 of the slave base station 100 - 2 outputs a scrambling code in phase with the master base station 100 - 1. The demodulation and decoding unit 103 carries out a descrambling processing or the like over the transmission data (for example, the transmission data 1) by using the scrambling code.

Thereafter, the slave base station 100 - 2 transfers the transmission data subjected to the demodulation or the like (for example, the transmission data 1) to the master base station 100 - 1 (S79). For instance, the demodulation and decoding unit 103 of the slave base station 100 - 2 transmits the transmission data 1 to the master base station 100 - 1 through the control of the scheduler 110, or the like.

In the third embodiment, thus, the terminal 200 carries out the scrambling processing on the different transmission data by using the scrambling code on the master base station 100 - 1 side and transits the transmission data thus processed. Moreover, the two base stations 100 - 1 and 100 - 2 share the phase difference information and generate the scrambling codes in phase to carry out the descrambling processing. Accordingly, the terminal 200 does not generate a difference scrambling code for the different transmission data. Therefore, the processing of the terminal 200 can be relieved so that a power consumption can also be reduced.

<Other Embodiments>

Next, other embodiments will be described. In each of the embodiments, the description has been given on the assumption that the master base station 100 - 1 determines the CoMP transmission (S31 in Fig. 11, or the like). For example, the determination may be carried out by the terminal 200. For example, the CoMP communication control unit 220 of the terminal 200 can carry out the determination depending on whether both of the radio communication qualities are equal to or greater than a threshold based on the measured radio communication quality (S27 in Fig. 10). In this case, the measured radio communication quality is not transmitted to the base stations 100 - 1 and 100 - 2. Therefore, it is possible to further relieve the processing of the master base station 100 - 1.

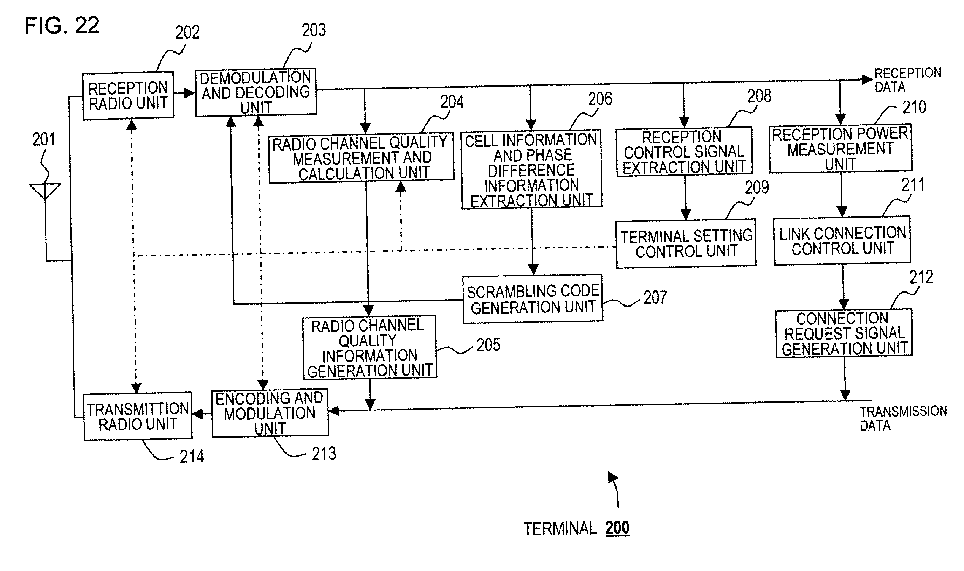

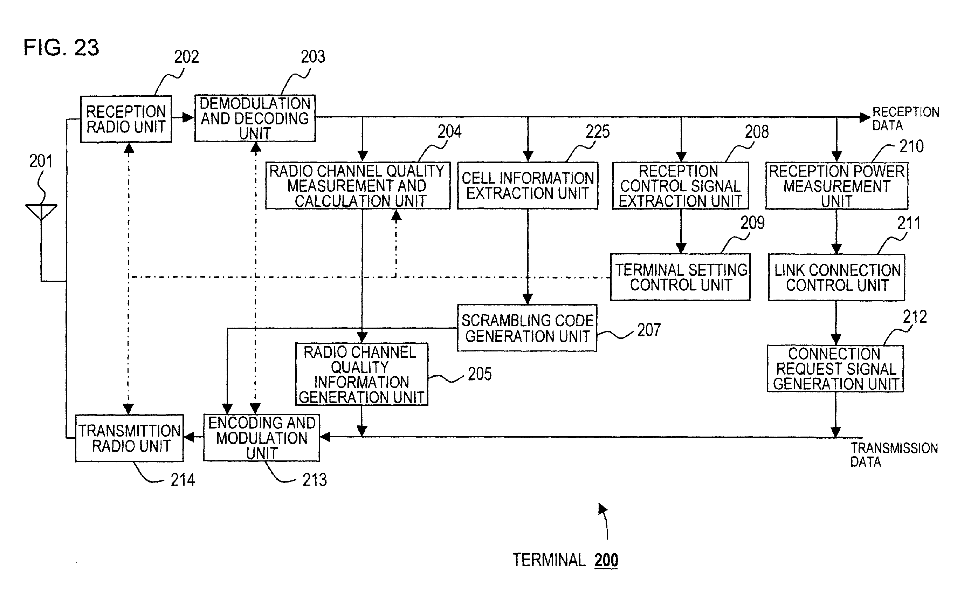

Moreover, the description has been given on the assumption that the terminal 200 gives the execution request for the CoMP transmission in each of the embodiments. For example, the master base station 100 - 1 may give the execution request. In the case of the downward direction, when it is determined that the master base station 100 - 1 carries out the CoMP transmission (S31), for example, the CoMP execution request can also be transmitted to the terminal 200 and the slave base station 100 - 2. Then, the master base station 100 - 1 can be executed by giving the execution notification (S34, S35). Referring to the upward direction, furthermore, the master base station 100 - 1 transmits the CoMP transmission request to the terminal 200 or the like and gives the CoMP execution notification (S34 to S35), thereby enabling an execution after the determination of the CoMP transmission (S31). An example of a structure of the terminal 200 in this case is illustrated in Fig. 22 (the case of the downward direction) and Fig. 23 (the case of the upward direction). The terminal 200 has neither the CoMP communication control unit 220 nor the CoMP communication request signal generation unit 221 as compared with the embodiments described above. Therefore, it is possible to further reduce the power consumption.

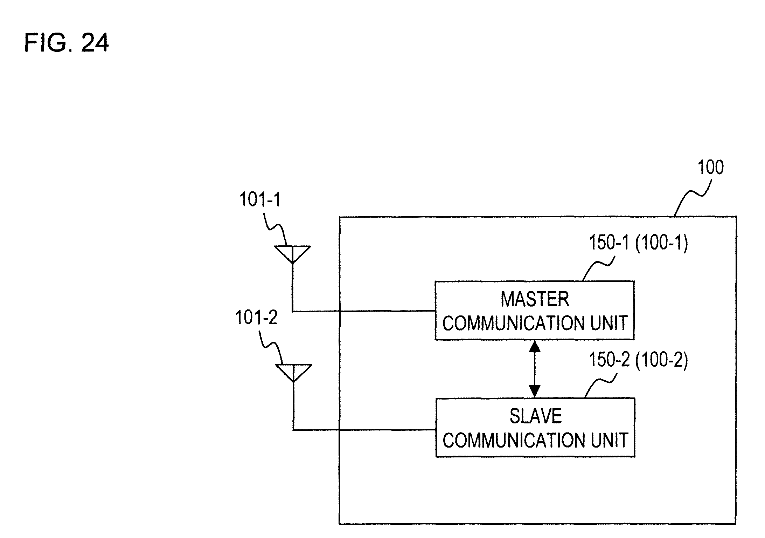

In each of the embodiments, furthermore, the description has been given to the example in which the transmission data is sent from the two base stations 100, that is, the master base station 100 - 1 and the slave base station 100 - 2. For example, a single base station 100 having a plurality of cells (or sectors) may transmit the transmission data. Fig. 24 is a diagram illustrating an example of the structure of the base station 100. The base station 100 includes a master communication unit 150 - 1, a slave communication unit 150 - 2, and antennas 101 - 1 and 101 - 2 which are connected to the communication units 150 - 1 and 150 - 2. The master communication unit 150 - 1 includes each unit 102 or the like in the master base station 100 - 1, and the slave communication unit 150 - 2 includes each unit 102 or the like in the slave base station 100 - 2. For example, the master communication unit 150 - 1 outputs the held phase difference information to the slave communication unit 150 - 2, and the slave communication unit 150 - 2 generates a scrambling code based on the phase difference information. Moreover, the slave communication unit 150 - 2 transmits the cell information to the master communication unit 150 - 1, and the master communication unit 150 - 1 computes the phase difference information together with the cell information of the self station and outputs the phase difference information to the slave communication unit 150 - 2. Consequently, the present invention can be executed in the same manner as in the first to third embodiments.

In each of the embodiments, moreover, the cell number, the terminal number and the slot number to be used in the CoMP transmission can also be set to be a cell number, a terminal number and a slot number which are dedicated to CoMPo For example, the cell information signal generation unit 106 can also rewrite the cell number, the terminal number and the slot number to each number dedicated to the CoMP.

In addition, the description has been given to the phase difference in the scrambling code in each of the embodiments. For example, the present invention can also be executed by using at least one of a difference in the terminal number, a difference in the cell number or a difference in the slot number. The initial value of the scrambling code is generated from the cell information such as the terminal number. Therefore, the difference in the terminal number or the like can be handled in the same manner as the phase difference in the scrambling code. For example, the cell information signal generation unit 106 (Fig. 3) of the master base station 100 - 1 transmits the difference in the cell number or the like as the phase difference information to the slave base station 100 - 2 so that the present invention can be executed in the same manner as in the first embodiment or the like.

Moreover, the description has been given to the example in which the CoMP transmission is carried out between the two base stations 100 - 1 and 100 - 2 and the terminal 200 in each of the embodiments. For example, it is also possible to execute the CoMP transmission between at least three base stations 100 and the terminal 200. In this case, it is possible to execute the CoMP transmission by using one of at least three base stations as a master base station and using the other base stations as slave base stations, and transmitting the cell information from the master base station to the slave base stations in the same manner as in each of the embodiments.

EXPLANATION OF REFERENCE NUMERALS

10: radio communication system
100: base station apparatus (base station)
100 - 1: master base station
100 - 2: slave base station
103: demodulation and decoding unit
105: radio link control unit
106: cell information signal generation unit
107: CoMP communication request signal extraction unit
108: CoMP communication execution determination and control unit (control unit)
109: radio channel quality information extraction unit
110: scheduler
111: control signal generation unit
112: scrambling code generation unit
112 - 1: first shift register
112 - 2: first exclusive OR circuit
112 - 3: second shift register
112 - 4: second exclusive OR circuit
112 - 5 to 112 - 13: third to eleventh exclusive OR circuit
112 - 14: initial value setting unit
112 - 15, 112 - 16: first and second switch group
112 - 17 to 112 - 19: twelfth to fourteenth exclusive OR circuit
114: encoding and modulation unit
150 - 1: mater communication unit
150 - 2: slave communication unit
200: terminal apparatus (terminal)
203: demodulation and decoding unit
204: radio channel quality measurement and calculation unit (calculation unit)
205: radio channel quality information generation unit
206: cell information and phase difference information extraction unit (phase difference information extraction unit)
207: scrambling code generation unit
208: reception control signal extraction unit
209: terminal setting control unit
210: reception power measurement unit
213: encoding and modulation unit
220: CoMP communication control unit
221: CoMP communication request signal generation unit
225: cell information extraction unit

**Claims**

1. A radio communication system, comprising:

a first and second base station apparatuses which includes one or plurality of cells or sectors, respectively; and
a terminal apparatus, wherein
the radio communication system performs a radio communication between the first and second base station apparatuses and the terminal apparatus,
each of the first and second base station apparatuses includes:

a processing unit which executes scrambling processing on a first and second transmission data that are different from each other for each cell or sector by using a first and second scrambling codes having a predetermined phase difference respectively, when the first and second transmission data are to be transmitted to the terminal apparatus respectively; and
a transmission unit which transmits the first and second transmission data processed by the scrambling processing to the terminal apparatus respectively, and
the terminal apparatus includes a reception unit which receives the first and second transmission data and executes descrambling processing on the first and second transmission data by using the first and second scrambling codes respectively.

**2.** The radio communication system according to claim 1, wherein the transmission unit of the first base station apparatus transmits to the terminal apparatus a phase difference information indicating the phase difference, and the reception unit of the terminal apparatus generates the second scrambling code based on the phase difference information.

**3.** The radio communication system according to claim 2, wherein the first base station apparatus further includes a phase difference information generation unit which outputs the prestored phase difference information to the transmission unit.

**4.** The radio communication system according to claim 2, wherein the first base station apparatus further includes an output unit which outputs the phase difference information to the second base station apparatus, and the processing unit of the second base station apparatus generates the second scrambling code based on the phase difference information.

**5.** The radio communication system according to claim 2, wherein the second base station apparatus further includes an output unit which outputs a second cell information to generate the second scrambling code to the first base station apparatus, and the first base station apparatus further includes a phase difference information generation unit which generates the phase difference information based on a first cell information to generate the first scrambling code and the second ceil information.

**6.** The radio communication system according to claim 1, wherein the first base station apparatus further includes an output unit which outputs to the second base station apparatus a first cell information and a phase difference information indicating the phase difference, the processing unit of the first base station apparatus generates the first cell information and generates the first scrambling code based on the first cell information, the processing unit of the second base station apparatus generates the second scrambling code based on the first cell information and the phase difference information, the transmission unit of the first base station apparatus transmits the first cell information and the phase difference information to the terminal apparatus, and the reception unit of the terminal apparatus generates the first scrambling code based on the first cell information and generates the second scrambling code based on the first cell information and the phase difference information.

**7.** The radio communication system according to claim 1, wherein the second base station apparatus further includes an output unit which outputs a second cell information to the first base station apparatus, the first base station apparatus further includes a phase difference information generation unit which generates a phase difference information indicating the phase difference based on the second cell information and a first cell information, the processing unit of the first base station apparatus generates the first cell information and generates the first scrambling code based on the first cell information, the processing unit of the second base station apparatus generates the second cell information and generates the second scrambling code based on the second cell information, the transmission unit of the first base station apparatus transmits the first cell information and the phase difference information to the terminal apparatus, and the reception unit of the terminal apparatus generates the first scrambling code based on the first cell information and generates the second scrambling code based on the first cell information and the phase difference information.

**8.** The radio communication system according to claim 6, wherein the first cell information includes a first cell number identifying the cell or sector, a first terminal number identifying the terminal apparatus, and a first slot number identifying a slot.

**9.** The radio communication system according to claim 7, wherein the first and second cell information include a first and second cell numbers identifying the cell or sector respectively, a first and second terminal numbers identifying the terminal apparatus respectively, and a first and second slot numbers identifying a slot respectively.

**10.** The radio communication system according to claim 8, wherein the first cell number, the first terminal number, and the first slot number are a first cell number, a first terminal number, and a first slot number which are dedicated to transmission of the first and second data, respectively.

**11.** The radio communication system according to claim 9, wherein the first and second cell numbers, the first and second terminal numbers, and the first and second slot numbers are cell numbers, terminal numbers, and slot numbers which are dedicated to transmission of the first and second data, respectively.

**12.** The radio communication system according to claim 1, wherein the first base station apparatus further includes a scheduler which generates a precoding information,
the scheduler transmits the precoding information to the second base station apparatus, and
each of the transmission units of the first and second base station apparatuses performs weighting on the first and second transmission data based on the precoding information, and transmits the data to the terminal apparatus.

**13.** A radio communication method in a radio communication system for performing a radio communication between a first and second base station apparatuses, each of which includes one or a plurality of cells or sectors, and a terminal apparatus, the method comprising:

executing scrambling processing on a first and second transmission data that are different from each other for each cell or sector by using a first and second scrambling codes having a predetermined phase difference, when the first and second transmission data are to be transmitted to the terminal apparatus respectively, by the first and second base station apparatus;
transmitting the first and second transmission data processed by the scrambling processing to the terminal apparatus respectively, by the first and second base station apparatus; and
receiving the first and second transmission data and executing descrambling processing on the first and second transmission data by using the first and second scrambling codes respectively, by the terminal apparatus.

**14.** A base station apparatus for performing a radio communication between the base station with another base station apparatus having one or a plurality of cells or sectors and a terminal apparatus, the base station apparatus comprising:

one or a plurality of the cells or sectors;
a processing unit which executes scrambling processing on a first or second transmission data that are different from each other for each the cell or sector by using a first or second scrambling code having a predetermined phase difference, when the first or second transmission data is to be transmitted to the terminal apparatus respectively; and
a transmission unit which transmits the first or second transmission data processed by the scrambling processing to the terminal apparatus.

**15.** A terminal apparatus for performing a radio communication with a first and second base station apparatuses, each of which includes one or a plurality of cells or sectors, the terminal apparatus comprising:

a reception unit which receives a first and second transmission data that are different from each other for each the cell or sector and are processed by scrambling processing by using a first and second scrambling codes having a predetermined phase difference, and executes descrambling processing on the first and second transmission data by using the first and second scrambling codes respectively, on receiving the first and second transmission data from the first and second base station apparatuses

**16.** A radio communication system, comprising:

a first and second base station apparatuses each of which includes one or a plurality of cells or sectors; and
a terminal apparatus, wherein
the radio communication system performs a radio communication between the first and second base station apparatuses,
the terminal apparatus includes:

a processing unit which executes scrambling processing on a first and second transmission data that are different from each other for each the cell or sector by using a first scrambling code; and
a transmission unit which transmits the first and second transmission data processed by the scrambling processing to the first and second base station apparatuses respectively, and
the first and second base station apparatuses each include a reception unit which executes descrambling processing on the first and second transmission data by using the first scrambling code.

17. A radio communication method in a radio communication system for performing a radio communication between a first and second base station apparatuses, each of which has one or a plurality of cells or sectors, and a terminal apparatus, the method comprising:

executing scrambling processing on a first and second transmission data that are different from each other for each cell or sector by using a first scrambling code, by the terminal apparatus;
transmitting the first and second transmission data processed by the scrambling processing to the first and second base station apparatuses respectively, and
the first and second base station apparatuses execute descrambling processing on the first and second transmission data by using the first scrambling code respectively.

18. A base station apparatus for performing a radio communication between the base station apparatus with another base station apparatus including one or a plurality of cells or sectors and a terminal apparatus, the base station apparatus comprising:

one or a plurality of cells or sectors; and
a reception unit which receives a first or second transmission data processed by scrambling processing by using a first scrambling on the first and second transmission data that are different from each other of each the cell or sector, and executes descrambling processing on the first and second transmission data by using the first scrambling code.

19. A terminal apparatus for performing a radio communication with a first and second base station apparatuses, each of which includes one or a plurality of cells or sectors, the terminal apparatus comprising:

a processing unit which executes scrambling processing on a first and second transmission data that are different from each other for each the cell or sector by using a first scrambling code; and
a transmission unit which transmits the first and second transmission data processed by the scrambling processing to the first and second base station apparatuses.

20. A radio communication system, comprising:

a base station apparatus which included a plurality of sectors, and a first and second communication units for the respective sectors; and
a terminal apparatus, wherein
the radio communication system performs a radio communication between the base station apparatus and the terminal apparatus,
the first and second communication units include:

a processing unit which executes scrambling processing on a first and second transmission data that are different from each other for each the sector by using a first and second scrambling codes having a predetermined phase difference respectively, when the first and second transmission data are to be transmitted to the terminal apparatus respectively; and
a transmission unit which transmits the first and second transmission data processed by the scrambling processing to the terminal apparatus respectively, and
the terminal apparatus includes a reception unit which receives the first and second transmission data, and executes descrambling processing on the first and second transmission data by using the first and second scrambling codes respectively.

21. A radio communication system, comprising:

a base station apparatus which includes a plurality of sectors, and a first and second communication units for the respective sectors; and
a terminal apparatus, wherein
the radio communication system performs the base station apparatus and the terminal apparatus,
terminal apparatus includes:

a processing unit which executes scrambling processing on a first and second transmission data that are different from each other for each the sector by using a first scrambling code; and

a transmission unit which transmits the first and second transmission data processed by the scrambling processing to the base station apparatus respectively, and

the first and second communication units of the base station apparatus receive the first and second transmission data respectively, and execute descrambling processing on the first and second transmission data respectively by using the first scrambling code.

FIG. 1

100-2

100-1

200

RADIO COMMUNICATION SYSTEM **10**

FIG. 2

RADIO COMMUNICATION SYSTEM **10**

## FIG. 3

MASTER BASE STATION **100-1**

# FIG. 4

SLAVE BASE STATION **100-2**

EP 2 451 230 A1

FIG. 5

TERMINAL **200**

EP 2 451 230 A1

FIG. 6

GOLD CODE GENERATOR

EP 2 451 230 A1

# FIG. 7

112-7

112-1

112-6

112-5

MSB          LSB

x(i)

112-2

112-4

y(i)

112-3

- - → 1-BIT PHASE DIFFERENCE

- · → 2-BIT PHASE DIFFERENCE

GOLD CODE GENERATOR

FIG. 8

MSB

112-1

112-10    112-11

112-8    112-9

LSB    112-5

x(i)

112-2

112-4

y(i)

112-12

112-3

112-13

--►  32-BIT PHASE DIFFERENCE

--·►  33-BIT PHASE DIFFERENCE

GOLD CODE GENERATOR

EP 2 451 230 A1

# FIG. 9

SCRAMBLING CODE GENERATION UNIT 112,207

EP 2 451 230 A1

## FIG. 10

CELL INFORMATION OR THE LIKE NOTIFICATION (S10)

PILOT TRANSMISSION (S11)

CELL SELECTION ∿ S12

LINK SET UP (S13)

CQI MEASUREMENT ∿ S14

CQI (S15)

SCHEDULING ∿ S16

TRANSMISSION SIGNAL PROCESS ∿ S17

TRANSMISSION CONTROL SIGNAL (S18)

TRANSMISSION DATA (S19)

RECEPTION SIGNAL PROCESS ∿ S20

CELL INFORMATION OR THE LIKE NOTIFICATION (S21)

PILOT TRANSMISSION (S22)

CELL SELECTION ∿ S23

LINK SET UP (S24)

PILOT TRANSMISSION (S25)

PILOT TRANSMISSION (S26)

CQI MEASUREMENT } S27

(A)            (B)            (C)

# FIG. 11

FIG. 12

RADIO COMMUNICATION SYSTEM **10**

# FIG. 13

MASTER BASE STATION **100-1**

EP 2 451 230 A1

FIG. 14

## FIG. 15

(A)                    (B)                    (C)

CQI                                           (S28)

(S29)

(S30)

CoMP TRANSMISSION
DETERMINATION    S31

CoMP TRANSMISSION
EXECUTION REQUEST                             (S32)

(S33)

(S34) CoMP TRANSMISSION EXECUTION NOTIFICATION

(S35)

INTER-BASE STATION SYNCHRONIZATION    S36

SCHEDULING    S37

CELL INFORMATION NOTIFICATION

(S50)

PHASE DIFFERENCE
INFORMATION    S51
CALCULATION

(S52) PHASE DIFFERENCE INFORMATION NOTIFICATION

(S40) DATA TRANSFER (TRANSMISSION DATA 2)

S42 TRANSMISSION CONTROL INFORMATION NOTIFICATION

(S41)

TRANSMISSION
SIGNAL PROCESS

TRANSMISSION
SIGNAL PROCESS    S43

TRANSMISSION CONTROL SIGNAL (S44)

TRANSMISSION DATA 1 (S45)

TRANSMISSION DATA 2

(S46)

RECEPTION
SIGNAL PROCESS    S47

FIG. 16

USCH

100-2

eNB2

SLAVE

UCCH

USCH

eNB1

100-1

MASTER

200

RADIO COMMUNICATION SYSTEM **10**

FIG. 17

MASTER BASE STATION **100-1**

101 — (antenna)

102 — RECEPTION RADIO UNIT

103 — DEMODULATION AND DECODING UNIT

104 — CONNECTION REQUEST SIGNAL EXTRACTION UNIT

107 — CoMP COMMUNICATION REQUEST SIGNAL EXTRACTION UNIT

108 — CoMP COMMUNICATION EXECUTION DETERMINATION AND CONTROL UNIT

121 — RADIO CHANNEL QUALITY MEASUREMENT AND CALCULATION UNIT

110 — SCHEDULER

112 — SCRAMBLING CODE GENERATION UNIT

111 — CONTROL SIGNAL GENERATION UNIT

114 — ENCODING AND MODULATION UNIT

115 — TRANSMITTION RADIO UNIT

105 — RADIO LINK CONTROL UNIT

106 — CELL INFORMATION SIGNAL GENERATION UNIT

113 — TRANSMISSION DATA BUFFER

USED FREQUENCY

CoMP EXECUTION NOTIFICATION

CELL NUMBER, TERMINAL NUMBER

TRANSMISSION SLOT NUMBER

USED FREQUENCY, PRECODING INFORMATION

RECEPTION DATA

RADIO CHANNEL QUALITY INFORMATION FROM NEIGHBORING BASE STATION

CoMP EXECUTION NOTIFICATION TO CoMP EXECUTING BASE STATION

CoMP CONTROL SIGNAL (PRECODING INFORMATION) TO CoMP EXECUTING BASE STATION

CELL INFORMATION FROM CoMP EXECUTING BASE STATION

PHASE DIFFERENCE INFORMATION TO CoMP EXECUTING BASE STATION

TRANSMISSION DATA

# FIG. 18

SLAVE BASE STATION **100-2**

FIG. 19

EP 2 451 230 A1

## FIG. 20

```
      100-1                  100-2                    200
   ┌──────────┐          ┌──────────┐          ┌──────────┐
   │  MASTER  │          │  SLAVE   │          │ TERMINAL │
   │BASE STATION│        │BASE STATION│        │    UE    │
   │   eNB1   │          │   eNB2   │          │          │
   └──────────┘          └──────────┘          └──────────┘
```

CELL INFORMATION OR THE LIKE NOTIFICATION (S10)

PILOT TRANSMISSION (S11)

CELL SELECTION ~ S12

LINK SET UP (S13)

PILOT TRANSMISSION (S60)

CQI MEASUREMENT ~ S61

SCHEDULING ~ S16

TRANSMISSION CONTROL SIGNAL (S18)

TRANSMISSION SIGNAL PROCESS ~ S62

TRANSMISSION DATA (S63)

CELL INFORMATION OR THE LIKE NOTIFICATION (S21)

PILOT TRANSMISSION (S22)

CELL SELECTION ~ S23

LINK SET UP (S24)

CoMP TRANSMISSION REQUEST (S32)
(S33)

PILOT TRANSMISSION (S64)
(S65)

(D)                    (E)                    (F)

# FIG. 21

FIG. 22

EP 2 451 230 A1

201 (antenna)

202 RECEPTION RADIO UNIT

203 DEMODULATION AND DECODING UNIT

RECEPTION DATA

204 RADIO CHANNEL QUALITY MEASUREMENT AND CALCULATION UNIT

206 CELL INFORMATION AND PHASE DIFFERENCE INFORMATION EXTRACTION UNIT

208 RECEPTION CONTROL SIGNAL EXTRACTION UNIT

210 RECEPTION POWER MEASUREMENT UNIT

209 TERMINAL SETTING CONTROL UNIT

211 LINK CONNECTION CONTROL UNIT

207 SCRAMBLING CODE GENERATION UNIT

212 CONNECTION REQUEST SIGNAL GENERATION UNIT

205 RADIO CHANNEL QUALITY INFORMATION GENERATION UNIT

TRANSMISSION DATA

214 TRANSMITTION RADIO UNIT

213 ENCODING AND MODULATION UNIT

TERMINAL 200

FIG. 23

EP 2 451 230 A1

FIG. 24

EP 2 451 230 A1

## INTERNATIONAL SEARCH REPORT

| International application No. |
| --- |
| PCT/JP2009/002982 |

A.  CLASSIFICATION OF SUBJECT MATTER
H04W72/04(2009.01)i, H04W48/10(2009.01)i

According to International Patent Classification (IPC) or to both national classification and IPC

B.  FIELDS SEARCHED

Minimum documentation searched (classification system followed by classification symbols)
H04W72/04, H04W48/10

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>A | WO 2008/053932 A1  (KDDI Corp.),<br>08 May, 2008 (08.05.08),<br>Par. Nos. [0034] to [0041]; Figs. 2, 5, 6<br>(Family: none) | 1-11,13-21<br>12 |

☐  Further documents are listed in the continuation of Box C.        ☐  See patent family annex.

| | |
| --- | --- |
| *    Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    14 September, 2009 (14.09.09) | Date of mailing of the international search report<br>    29 September, 2009 (29.09.09) |
| --- | --- |
| Name and mailing address of the ISA/<br>    Japanese Patent Office | Authorized officer |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006311475 A

- JP 2008092379 A